# EUROPEAN PATENT APPLICATION

(11) **EP 4 714 627 A1**
(43) Date of publication of application: **25.03.2026**
(21) Application number: 25202348.6
(22) Date of filing: 16.09.2025
(51) Int. Cl.: B29C 43/00

(54) **PROCESS FOR FORMING A COMPONENT**

(30) Priority: 20.09.2024 US 202463697442 P
(71) Applicant: Chromalloy Gas Turbine LLC, Palm Beach Gardens, Florida 33410 (US)
(72) Inventor: DIGHELLO, Brigette, Windsor, Connecticut, 06095 (US)
(74) Representative: ABG Intellectual Property Law, S.L.

(57) **Abstract**

A method of forming a diaphragm can use a composition as a resin. The method can include preforming, sintering, coining, quenching, and stabilizing the resin. For example, the diaphragm can be for use in a diaphragm pump. The composition can include a first powder including a first fluoropolymer including polytetrafluoroethylene and/or a first copolymer of tetrafluoroethylene and non-tetrafluoroethylene and can include a second powder including a second fluoropolymer including polytetrafluoroethylene and/or a second copolymer of tetrafluoroethylene and non-tetrafluoroethylene.

## Description

This application claims the benefit of U.S. Provisional Application No. 63/697,442, filed September 20, 2024, the specification and any additional aspects of which are hereby incorporated by reference in their entireties.

### TECHNICAL FIELD

Compositions, for example, for use in forming a component, such as a diaphragm for a diaphragm pump, and processes for forming a component, such as a diaphragm for a diaphragm pump, are presented.

### SUMMARY

An aspect of the embodiments includes a composition, comprising:
a first powder including:
   a first particle set of a first fluoropolymer of average particle diameter in a range from about 475 µm to about 625 µm, from about 500 µm to about 600 µm, or from about 525 µm to about 575 µm or of about 550 µm,
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
   wherein the first fluoropolymer comprises at least one of polytetrafluoroethylene and a first copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer, and
   wherein the first powder has a bulk density in a range from about 600 g/L to about 800 g/L, from about 650 g/L to about 750 g/L, or from about 675 g/L to about 725 g/L or of about 700 g/L, and
a second powder including:
   a second particle set of a second fluoropolymer of average particle diameter in a range from about 400 µm to about 550 µm, from about 400 µm to about 525 µm, from about 400 µm to about 500 µm, or from about 450 µm to about 500 µm or of about 475 µm,
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
   wherein the second fluoropolymer comprises at least one of a polytetrafluoroethylene and a second copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer, and
   wherein the second powder has a bulk density in a range from about 600 g/L to about 800 g/L, from about 650 g/L to about 750 g/L, or from about 675 g/L to about 725 g/L or of about 700 g/L.

An aspect of the embodiments includes a composition, comprising:
the first powder including:
   the first particle set of the first fluoropolymer of average particle diameter in a range from about 475 µm to about 625 µm, from about 500 µm to about 600 µm, or from about 525 µm to about 575 µm or of about 550 µm,
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
   wherein the first fluoropolymer consists essentially of at least one of polytetrafluoroethylene and the first copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, and
   wherein the first powder has the bulk density in a range from about 600 g/L to about 800 g/L, from about 650 g/L to about 750 g/L, or from about 675 g/L to about 725 g/L or of about 700 g/L, and
the second powder including:
   the second particle set of the second fluoropolymer of average particle diameter in a range from about 400 µm to about 550 µm, from about 400 µm to about 525 µm, from about 400 µm to about 500 µm, or from about 450 µm to about 500 µm or of about 475 µm,
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
   with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
   wherein the second fluoropolymer consists essentially of at least one of polytetrafluoroethylene and the second copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer, and
   wherein the second powder has the bulk density in a range from about 600 g/L to about 800 g/L, from about 650 g/L to about 750 g/L, or from about 675 g/L to about 725 g/L or of about 700 g/L.

A further aspect of the embodiments includes any one or more of the above aspects, and further wherein the first fluoropolymer comprises the first copolymer of tetrafluoroethylene comonomer and with the weight percentage being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer.

A further aspect of the embodiments includes any one or more of the above aspects, and further wherein the first fluoropolymer consists essentially of the first copolymer of tetrafluoroethylene comonomer and with the weight percentage being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer.

A further aspect of the embodiments includes any one or more of the above aspects, and further wherein the second fluoropolymer comprises the second copolymer of tetrafluoroethylene comonomer and with the weight percentage being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer.

A further aspect of the embodiments includes any one or more of the above aspects, and further wherein the second fluoropolymer consists essentially of the second copolymer of tetrafluoroethylene comonomer and with the weight percentage being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer.

A further aspect of the embodiments includes any one or more of the above aspects, and further wherein the first powder and the second powder together have a bimodal distribution of particle diameters.

A further aspect of the embodiments includes any one or more of the above aspects, and further wherein the difference between the average particle diameter of the first particle set and the average particle diameter of the second particle set is in a range from 0 µm to about 150 µm, from about 25 µm to about 125 µm, or from about 50 µm to about 100 µm or of about 75 µm.

A further aspect of the embodiments includes any one or more of the above aspects, and further
wherein the first fluoropolymer has a tensile strength in a range from about 25 MPa to about 31 MPa, from about 26 MPa to about 30 MPa, or from about 27 MPa to about 29 MPa or of about 28 MPa at about 23 °C, and
wherein the second fluoropolymer has a tensile strength in a range from about 25 MPa to about 31.5 MPa, from about 27 MPa to about 31.5 MPa, or from about 29 MPa to about 31 MPa or of about 30 MPa at about 23 °C.

A further aspect of the embodiments includes any one or more of the above aspects, and further
wherein the first fluoropolymer has an elongation at break in a range from about 350% to about 550%, from about 400% to about 500%, or from about 425% to about 475% or of about 450% at about 23 °C, and
wherein the second fluoropolymer has an elongation at break in a range from about 300% to about 500%, from about 350% to about 475%, or from about 375% to about 425% or of about 400% at about 23 °C.

A further aspect of the embodiments includes any one or more of the above aspects, and further wherein the composition comprises from about 10 wt% to about 90 wt% of the first fluoropolymer, from about 25 wt% to about 75 wt% of the first fluoropolymer, from about 40 wt% to about 60 wt% of the first fluoropolymer, or about 50 wt% of the first fluoropolymer.

A further aspect of the embodiments includes any one or more of the above aspects, and further wherein the first particle set of the first fluoropolymer and the second particle set of the second fluoropolymer are uniformly or substantially uniformly mixed.

A further aspect of the embodiments includes any one or more of the above aspects, and further
wherein the first particle set of the first fluoropolymer has the average particle diameter in a range from about 525 µm to about 575 µm or of about 550 µm,
wherein the first fluoropolymer comprises the first copolymer of tetrafluoroethylene comonomer and with the weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer,
wherein the first powder has the bulk density in a range from about 675 g/L to about 725 g/L or of about 700 g/L,
wherein the second particle set of the second fluoropolymer has the average particle diameter in a range from about 400 µm to about 500 µm or of about 475 µm,
wherein the second fluoropolymer comprises the second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer, and
wherein the second powder has the bulk density in a range from about 675 g/L to about 725 g/L or of about 700 g/L.

A further aspect of the embodiments includes any one or more of the above aspects, and further
wherein the first particle set of the first fluoropolymer has the average particle diameter in a range from about 525 µm to about 575 µm or of about 550 µm,
wherein the first fluoropolymer consists essentially of the first copolymer of tetrafluoroethylene comonomer and with the weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer,
wherein the first powder has the bulk density in a range from about 675 g/L to about 725 g/L or of about 700 g/L,
wherein the second particle set of the second fluoropolymer has the average particle diameter in a range from about 400 µm to about 500 µm or of about 475 µm,
wherein the second fluoropolymer consists essentially of the second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer, and
wherein the second powder has the bulk density in a range from about 675 g/L to about 725 g/L or of about 700 g/L.

A further aspect of the embodiments includes any one or more of the above aspects, and further
wherein the first non-tetrafluoroethylene comonomer of the first copolymer of the first fluoropolymer comprises a first perfluoro(alkyl vinyl ether) compound, and
wherein the second non-tetrafluoroethylene comonomer of the second copolymer of the second fluoropolymer comprises a second perfluoro(alkyl vinyl ether) compound
the first perfluoro(alkyl vinyl ether) compound and the second perfluoro(alkyl vinyl ether) compound are the same or different.

A further aspect of the embodiments includes any one or more of the above aspects, and further
wherein the first non-tetrafluoroethylene comonomer of the first copolymer of the first fluoropolymer consists essentially of a first perfluoro(alkyl vinyl ether) compound, and
wherein the second non-tetrafluoroethylene comonomer of the second copolymer of the second fluoropolymer consists essentially of a second perfluoro(alkyl vinyl ether) compound.

A further aspect of the embodiments includes any one or more of the above aspects, and further
wherein the first perfluoro(alkyl vinyl ether) compound is perfluoro(methyl vinyl ether), perfluoro(ethyl vinyl ether), perfluoro(propyl vinyl ether), perfluoro(n-propyl vinyl ether), perfluoro(1-methylethyl vinyl ether), perfluoro(butyl vinyl ether), perfluoro(n-butyl vinyl ether), perfluoro(1-methylpropyl vinyl ether), perfluoro(2-methylpropyl vinyl ether), perfluoro(1,1-dimethylethyl vinyl ether), perfluoro(pentyl vinyl ether), perfluoro(n-pentyl vinyl ether), perfluoro(1,1-dimethylpropyl vinyl ether), perfluoro(2,2-dimethylpropyl vinyl ether), perfluoro(3-methylbutyl vinyl ether), perfluoro(1-methylbutyl vinyl ether), perfluoro(1-ethylpropyl vinyl ether), perfluoro(1,2-dimethylpropyl vinyl ether), and/or perfluoro(2-methylbutyl vinyl ether), and
wherein the second perfluoro(alkyl vinyl ether) compound is perfluoro(methyl vinyl ether), perfluoro(ethyl vinyl ether), perfluoro(propyl vinyl ether), perfluoro(n-propyl vinyl ether), perfluoro(1-methylethyl vinyl ether), perfluoro(butyl vinyl ether), perfluoro(n-butyl vinyl ether), perfluoro(1-methylpropyl vinyl ether), perfluoro(2-methylpropyl vinyl ether), perfluoro(1,1-dimethylethyl vinyl ether), perfluoro(pentyl vinyl ether), perfluoro(n-pentyl vinyl ether), perfluoro(1,1-dimethylpropyl vinyl ether), perfluoro(2,2-dimethylpropyl vinyl ether), perfluoro(3-methylbutyl vinyl ether), perfluoro(1-methylbutyl vinyl ether), perfluoro(1-ethylpropyl vinyl ether), perfluoro(1,2-dimethylpropyl vinyl ether), and/or perfluoro(2-methylbutyl vinyl ether).

A further aspect of the embodiments includes any one or more of the above aspects, and further
wherein the first perfluoro(alkyl vinyl ether) compound is perfluoro(methyl vinyl ether), perfluoro(ethyl vinyl ether), perfluoro(propyl vinyl ether), perfluoro(n-propyl vinyl ether), and/or perfluoro(1-methylethyl vinyl ether), and
wherein the second perfluoro(alkyl vinyl ether) compound is perfluoro(methyl vinyl ether), perfluoro(ethyl vinyl ether), perfluoro(propyl vinyl ether), perfluoro(n-propyl vinyl ether), and/or perfluoro(1-methylethyl vinyl ether).

A further aspect of the embodiments includes any one or more of the above aspects, and further
wherein the first non-tetrafluoroethylene comonomer of the first copolymer of the first fluoropolymer comprises perfluoro(methyl vinyl ether), and
wherein the second non-tetrafluoroethylene comonomer of the second copolymer of the second fluoropolymer comprises perfluoro(methyl vinyl ether).

A further aspect of the embodiments includes any one or more of the above aspects, and further
wherein the first non-tetrafluoroethylene comonomer of the first copolymer of the first fluoropolymer consists essentially of perfluoro(methyl vinyl ether), and
wherein the second non-tetrafluoroethylene comonomer of the second copolymer of the second fluoropolymer consists essentially of perfluoro(methyl vinyl ether).

A further aspect of the embodiments includes any one or more of the above aspects, and further
wherein the first non-tetrafluoroethylene comonomer of the first copolymer of the first fluoropolymer comprises perfluoro(propyl vinyl ether), and
wherein the second non-tetrafluoroethylene comonomer of the second copolymer of the second fluoropolymer comprises perfluoro(propyl vinyl ether).

A further aspect of the embodiments includes any one or more of the above aspects, and further
wherein the first non-tetrafluoroethylene comonomer of the first copolymer of the first fluoropolymer consists essentially of perfluoro(propyl vinyl ether), and
wherein the second non-tetrafluoroethylene comonomer of the second copolymer of the second fluoropolymer consists essentially of perfluoro(propyl vinyl ether).

A further aspect of the embodiments includes any one or more of the above aspects, and further
wherein the first particle set of the first fluoropolymer has the average particle diameter in a range from about 500 µm to about 600 µm or of about 550 µm, and
wherein the second particle set of a second fluoropolymer has the average particle diameter in a range from about 400 µm to about 525 µm or of about 475 µm.

A further aspect of the embodiments includes any one or more of the above aspects, and further
wherein the first powder has the bulk density in a range from about 650 g/L to about 750 g/L, and
wherein the second powder has the bulk density in a range from about 650 g/L to about 750 g/L.

A further aspect of the embodiments includes any one or more of the above aspects, and further
wherein the first fluoropolymer comprises the first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, and
wherein the second fluoropolymer comprises the second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer.

A further aspect of the embodiments includes any one or more of the above aspects, and further
wherein the first fluoropolymer consists essentially of the first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, and
wherein the second fluoropolymer consists essentially of the second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer.

A further aspect of the embodiments includes any one or more of the above aspects, and further wherein the composition comprises
from about 25 wt% to about 75 wt% of the first fluoropolymer and from about 75 wt% to about 25 wt% of the second fluoropolymer,
from about 40 wt% to about 60 wt% of the first fluoropolymer and from about 60 wt% to about 40 wt% of the second fluoropolymer, or
about 50 wt% of the first fluoropolymer and about 50 wt% of the second fluoropolymer.

A further aspect of the embodiments includes any one or more of the above aspects, and further wherein the difference between the average particle diameter of the first particle set and the average particle diameter of the second particle set is in a range from about 25 µm to about 125 µm or from about 50 µm to about 100 µm or of about 75 µm.

A further aspect of the embodiments includes any one or more of the above aspects, and further
wherein the first non-tetrafluoroethylene comonomer of the first copolymer of the first fluoropolymer comprises at least one of perfluoro(methyl vinyl ether) and perfluoro(propyl vinyl ether),
wherein the second non-tetrafluoroethylene comonomer of the second copolymer of the second fluoropolymer comprises at least one of perfluoro(methyl vinyl ether) and perfluoro(propyl vinyl ether),
wherein the first particle set of the first fluoropolymer has the average particle diameter in a range from about 500 µm to about 600 µm or of about 550 µm,
wherein the first fluoropolymer comprises a first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer,
wherein the first powder has the bulk density in a range from about 650 g/L to about 750 g/L or of about 700 g/L,
wherein the second particle set of the second fluoropolymer has the average particle diameter in a range from about 400 µm to about 525 µm or of about 475 µm,
wherein the second fluoropolymer comprises a second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer,
wherein the second powder has the bulk density in a range from about 650 g/L to about 750 g/L or of about 700 g/L,
wherein the composition comprises from about 25 wt% to about 75 wt% of the first fluoropolymer and from about 75 wt% to about 25 wt% of the second fluoropolymer, or about 50 wt% of the first fluoropolymer and about 50 wt% of the second fluoropolymer, and
wherein the difference between the average particle diameter of the first particle set and the average particle diameter of the second particle set is in a range from about 25 µm to about 125 µm or of about 75 µm.

A further aspect of the embodiments includes any one or more of the above aspects, and further
wherein the first non-tetrafluoroethylene comonomer of the first copolymer of the first fluoropolymer consists essentially of at least one of perfluoro(methyl vinyl ether) and perfluoro(propyl vinyl ether),
wherein the second non-tetrafluoroethylene comonomer of the second copolymer of the second fluoropolymer consists essentially of at least one of perfluoro(methyl vinyl ether) and perfluoro(propyl vinyl ether),
wherein the first particle set of the first fluoropolymer has the average particle diameter in a range from about 500 µm to about 600 µm or of about 550 µm,
wherein the first fluoropolymer consists essentially of a first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer,
wherein the first powder has the bulk density in a range from about 650 g/L to about 750 g/L or of about 700 g/L,
wherein the second particle set of the second fluoropolymer has the average particle diameter in a range from about 400 µm to about 525 µm or of about 475 µm,
wherein the second fluoropolymer consists essentially of a second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer,
wherein the second powder has the bulk density in a range from about 650 g/L to about 750 g/L or of about 700 g/L,
wherein the composition consists essentially of from about 25 wt% to about 75 wt% of the first fluoropolymer and from about 75 wt% to about 25 wt% of the second fluoropolymer, or about 50 wt% of the first fluoropolymer and about 50 wt% of the second fluoropolymer, and
wherein the difference between the average particle diameter of the first particle set and the average particle diameter of the second particle set is in a range from about 25 µm to about 125 µm or of about 75 µm.

An aspect of the embodiments includes a method for forming a diaphragm, comprising:
selecting as a resin
   (i) a first powder including:
      a first particle set of a first fluoropolymer of average particle diameter in a range from about 400 µm to about 700 µm, from about 475 µm to about 625 µm, from about 500 µm to about 600 µm, or from about 525 µm to about 575 µm or of about 550 µm,
      optionally with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      optionally with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the first fluoropolymer comprises at least one of polytetrafluoroethylene and a first copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer, and
      optionally wherein the first powder has a bulk density in a range from about 600 g/L to about 800 g/L, from about 650 g/L to about 750 g/L, or from about 675 g/L to about 725 g/L or of about 700 g/L, or
   (ii) a second powder including:
      a second particle set of a second fluoropolymer of average particle diameter in a range from about 325 µm to about 625 µm, from about 400 µm to about 550 µm, from about 400 µm to about 525 µm, from about 400 µm to about 500 µm, or from about 450 µm to about 500 µm or about 475 µm,
      optionally with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      optionally with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the second fluoropolymer comprises at least one of a polytetrafluoroethylene and a second copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer, and
      optionally wherein the second powder has a bulk density in a range from about 600 g/L to about 800 g/L, from about 650 g/L to about 750 g/L, or from about 675 g/L to about 725 g/L or of about 700 g/L, or
   (iii) a composition, including:
      the first powder and the second powder,
optionally sifting the resin,
   wherein the sifting comprises allowing the resin to pass through a sifter having holes of diameter in a range from about 500 µm to about 1000 µm, from about 550 µm to about 750 µm, or from about 600 µm to about 700 µm,
preforming the resin including:
   loading a pre-determined amount of the resin into a mold and
   compressing the resin in the mold at a preforming pressure in a range from about 800 psi (5.5 MPa) to about 2400 psi (16.6 MPa), from about 1200 psi (8.2 MPa) to about 1800 psi (12.4 MPa), or from about 1400 psi (9.6 MPa) to about 1800 psi (12.4 MPa) or about 1600 psi (11.0 MPa) optionally for a time in a range from about 0.5 min. (30 sec.) to about 6 min. (360 sec.) or from about 1 min. (60 sec.) to about 4 min. (240 sec.) or about 3 min. (180 sec.),
sintering the resin, including:
   optionally increasing a temperature of the resin to a sintering temperature in a range from about 680 °F (360 °C) to about 780 °F (416 °C) or from about 720 °F (382 °C) to about 740 °F (393 °C) or of about 730 °F (388 °C),
   maintaining or applying the temperature in a range from about 680 °F (360 °C) to about 780 °F (416 °C) or from about 720 °F (382 °C) to about 740 °F (393 °C) or of about 730 °F (388 °C) optionally for a time in a range from about 15 min. (900 sec.) to about 45 min. (2700 sec.) or for about 30 min. (1800 sec.), and
   optionally decreasing the temperature to a cooled temperature in a range from about 180 °F (82 °C) to about 220 °F (104 °C) or from about 190 °F (88 °C) to about 210 °F (99 °C) or of about 200 °F (93 °C),
coining the resin, including:
   maintaining the resin at a coining pressure or applying a coining pressure to the resin in a range from about 348 psi (2.40 MPa) to about 398 psi (2.74 MPa) or of about 373 psi (2.57 MPa) and at a coining temperature or applying a coining temperature to the resin in a range from about 630 °F (332 °C) to about 730 °F (389 °C) or from about 670 °F (354 °C) to about 690 °F (366 °C) or of about 680 °F (360 °C) optionally for a time in a range from about 2 min. (120 sec.) to about 8 min. (480 sec.) or from about 4 min. (240 sec.) to about 6 min. (360 sec.) or for about 5 min. (300 sec.), and
   stamping the resin to coin the resin,
quenching the resin, including
   maintaining the resin at a quenching pressure or applying a quenching pressure to the resin in a range from about 838 psi (5.78 MPa) to about 908 psi (6.26 MPa) or of about 858 psi (5.92 MPa) and at a quenching temperature in a range from about 630 °F (332 °C) to about 730 °F (388 °C) or from about 670 °F (354 °C) to about 690 °F (366 °C) or of about 680 °F (360 °C) optionally for a time in a range from about 1 min. (60 sec.) to about 3 min. (180 sec.) or for about 2 min. (120 sec.), and
   stabilizing the resin at a stabilizing temperature in a range from about 40 °F (4 °C) to about 110 °F (43 °C) or from about 60 °F (16 °C) to about 90 °F (32 °C) or of about 75 °F (24 °C) optionally for a time in a range from about 1 hr. (3600 sec.) to about 48 hr. (173,000 sec.)
   to form the diaphragm as the stabilized resin,
   wherein the diaphragm includes a diaphragm diameter and a diaphragm thickness.

An aspect of the embodiments includes a method for forming the diaphragm, comprising:
selecting as the resin
   (i) the first powder including:
      the first particle set of the first fluoropolymer of average particle diameter in a range from about 400 µm to about 700 µm, from about 475 µm to about 625 µm, from about 500 µm to about 600 µm, or from about 525 µm to about 575 µm or of about 550 µm,
      with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the first fluoropolymer consists essentially of at least one of polytetrafluoroethylene and the first copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, and
      wherein the first powder has the bulk density in a range from about 600 g/L to about 800 g/L, from about 650 g/L to about 750 g/L, or from about 675 g/L to about 725 g/L or of about 700 g/L, or
   (ii) the second powder including:
      the second particle set of the second fluoropolymer of average particle diameter in a range from about 325 µm to about 625 µm, from about 400 µm to about 550 µm, from about 400 µm to about 525 µm, from about 400 µm to about 500 µm, or from about 450 µm to about 500 µm or about 475 µm,
      with weight percentages being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the second fluoropolymer consists essentially of at least one of polytetrafluoroethylene and the second copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer, and
      wherein the second powder has the bulk density in a range from about 600 g/L to about 800 g/L, from about 650 g/L to about 750 g/L, or from about 675 g/L to about 725 g/L or of about 700 g/L, or
   (iii) a composition, including:
      the first powder and the second powder,
sifting the resin,
   wherein the sifting comprises allowing the resin to pass through the sifter having holes of diameter in a range from about 500 µm to about 1000 µm, from about 550 µm to about 750 µm, or from about 600 µm to about 700 µm,
preforming the resin including:
   loading the pre-determined amount of the resin into the mold and compressing the resin in the mold at the preforming pressure in a range from about 800 psi (5.5 MPa) to about 2400 psi (16.6 MPa), from about 1200 psi (8.2 MPa) to about 1800 psi (12.4 MPa), or from about 1400 psi (9.6 MPa) to about 1800 psi (12.4 MPa) or about 1600 psi (11.0 MPa) for the time in a range from about 0.5 min. (30 sec.) to about 6 min. (360 sec.) or from about 1 min. (60 sec.) to about 4 min. (240 sec.) or about 3 min. (180 sec.),
sintering the resin, including:
   increasing the temperature of the resin to the sintering temperature in a range from about 680 °F (360 °C) to about 780 °F (416 °C) or from about 720 °F (382 °C) to about 740 °F (393 °C) or of about 730 °F (388 °C),
   maintaining the temperature in a range from about 680 °F (360 °C) to about 780 °F (416 °C) or from about 720 °F (382 °C) to about 740 °F (393 °C) or of about 730 °F (388 °C) for a range from about 15 min. (900 sec.) to about 45 min. (2700 sec.) or for about 30 min. (1800 sec.), and
   decreasing the temperature to the cooled temperature in a range from about 180 °F (82 °C) to about 220 °F (104 °C) or from about 190 °F (88 °C) to about 210 °F (99 °C) or of about 200 °F (93 °C),
coining the resin, including:
   maintaining the resin at the coining pressure in a range from about 348 psi (2.40 MPa) to about 398 psi (2.74 MPa) or of about 373 psi (2.57 MPa) and at the coining temperature in a range from about 630 °F (332 °C) to about 730 °F (389 °C) or from about 670 °F (354 °C) to about 690 °F (366 °C) or of about 680 °F (360 °C) for a range from about 2 min. (120 sec.) to about 8 min. (480 sec.) or from about 4 min. (240 sec.) to about 6 min. (360 sec.) or for about 5 min. (300 sec.) and
   stamping the resin to coin the resin,
quenching the resin, including
   maintaining the resin at the quenching pressure in a range from about 838 psi (5.78 MPa) to about 908 psi (6.26 MPa) or of about 858 psi (5.92 MPa) and at the quenching temperature in a range from about 630 °F (332 °C) to about 730 °F (388 °C) or from about 670 °F (354 °C) to about 690 °F (366 °C) or of about 680 °F (360 °C) for a range from about 1 min. (60 sec.) to about 3 min. (180 sec.) or for about 2 min. (120 sec.), and
stabilizing the resin at the stabilizing temperature in a range from about 40 °F (4 °C) to about 110 °F (43 °C) or from about 60 °F (16 °C) to about 90 °F (32 °C) or of about 75 °F (24 °C) for a range from about 1 hr. (3600 sec.) to about 48 hr. (173,000 sec.)
to form the diaphragm as the stabilized resin,
wherein the diaphragm comprises a diaphragm diameter and a diaphragm thickness.

A further aspect of the embodiments includes any one or more of the above aspects, and further
wherein increasing the temperature of the resin to the sintering temperature includes increasing the temperature at a rate of about 90 ± 10 °F/hr. (0.0139 ± 0.0015 °C/sec.) to about 230 °F (110 °C), maintaining the temperature of about 230 °F (110 °C) for about 30 mins. (1800 sec.), increasing the temperature at a rate of about 144 ± 10 °F/hr. (0.022 ± 0.0015 °C/sec.) to about 585 °F (307 °C), and increasing the temperature at a rate of about 144 ± 10 °F/hr. (0.022 ± 0.0015 °C/sec.) to the sintering temperature, and
wherein decreasing the temperature to a cooled temperature includes decreasing the temperature at a rate of about 260 ± 10 °F/hr (0.040 ± 0.0015 °C/sec.) to about 600 ± 10 °F (316 ± 6 °C), decreasing the temperature at a rate of about 40 °F/hr. (0.0062 °C/sec.) to about 580 °F (304 °C), and decreasing the temperature to the cooled temperature.

A further aspect of the embodiments includes any one or more of the above aspects, and further wherein forming the diaphragm includes forming the diaphragm with the diaphragm diameter in a range from about 0.12 inches (3.0 mm) to about 16 inches (406 mm), from about 0.25 inches (6.4 mm) to about 10 inches (254 mm), from about 0.5 inches (13 mm) to about 6 inches (152 mm), from about 0.5 inches (13 mm) to about 4 inches (102 mm), from about 1 inch (25 mm) to about 3 inches (76 mm), or from about 1.5 inches (38 mm) to about 2.5 inches (64 mm) or of about 2 inches (51 mm).

A further aspect of the embodiments includes any one or more of the above aspects, and further wherein forming the diaphragm includes forming the diaphragm with the diaphragm thickness in a range from about 0.01 inches (0.3 mm) to about 0.4 inches (10 mm), from about 0.02 inches (0.5 mm) to about 0.25 inches (6.4 mm), from about 0.02 inches (0.5 mm) to about 0.15 inches (3.8 mm), from about 0.04 inches (1.0 mm) to about 0.12 inches (3.0 mm), from about 0.07 inches (1.8 mm) to about 0.10 inches (2.5 mm), or from about 0.07 inches (1.8 mm) to about 0.08 inches (2.0 mm) or of about 0.075 inches (1.9 mm).

A further aspect of the embodiments includes any one or more of the above aspects, and further comprising:
inspecting for cracking in the resin and measuring the thickness of the resin following the preforming and ending the forming of the diaphragm if the resin is cracked or the thickness of the resin differs from a target post-preforming resin thickness by more than about 2%,
inspecting for cracking in the resin and measuring the thickness of the resin following the sintering and ending the forming of the diaphragm if the resin is cracked or the thickness of the resin differs from a target post-sintering resin thickness by more than about 3%,
inspecting for cracking in the resin and measuring the thickness of the resin following the coining and ending the forming of the diaphragm if the resin is cracked or the thickness of the resin differs from a target post-coining resin thickness by more than about 2%, and
inspecting for cracking in the resin and measuring the thickness of the resin following the quenching and ending the forming of the diaphragm if the resin is cracked or the thickness of the resin differs from a target post-quenching resin thickness by more than about 7%.

A further aspect of the embodiments includes any one or more of the above aspects, and further
wherein the preforming, sintering, coining, quenching, and stabilizing are conducted with a stud in the resin, so that the diaphragm comprises the stud, and
wherein a stud height is the distance between a top of the stud and a bottom of the resin.

A further aspect of the embodiments includes any one or more of the above aspects, and further comprising:
optionally measuring the stud height following the preforming and ending the forming of the diaphragm if the stud height differs from a target post-preforming stud height by more than about 0.4%,
optionally measuring the stud height following the sintering and ending the forming of the diaphragm if the stud height differs from a target post-sintering stud height by more than about 1%,
optionally measuring the stud height following the coining and ending the forming of the diaphragm if the stud height differs from a target post-coining stud height by more than about 0.4%, and
optionally measuring the stud height following the quenching and ending the forming of the diaphragm if the stud height differs from a target post-quenching stud height by more than about 3%.

A further aspect of the embodiments includes any one or more of the above aspects, and further comprising at least one of
punching a guide hole through the diaphragm,
die cutting the diaphragm, and
stamp marking the diaphragm.

A further aspect of the embodiments includes any one or more of the above aspects, and further wherein preforming the resin comprises compressing the resin in the mold at the preforming pressure in a range from about 1400 psi (9.6 MPa) to about 1800 psi (12.4 MPa) or of about 1600 psi (11.0 MPa) for a time in a range from about 1 min. (60 sec.) to about 4 min. (240 sec.) or of about 3 min. (180 sec.).

A further aspect of the embodiments includes any one or more of the above aspects, and further wherein sintering the resin includes:
increasing the temperature of the resin to a sintering temperature in a range from about 720 °F (382 °C) to about 740 °F (393 °C) or of about 730 °F (388 °C),
maintaining the temperature in a range from about 720 °F (382 °C) to about 740 °F (393 °C) or of about 730 °F (388 °C) for a time in a range from about 15 min. (900 sec.) to about 45 min. (2700 sec.) or for about 30 min. (1800 sec.), and
decreasing the temperature to a cooled temperature in a range from about 190 °F (88 °C) to about 210 °F (99 °C) or of about 200 °F (93 °C).

A further aspect of the embodiments includes any one or more of the above aspects, and further wherein coining the resin comprises maintaining the resin at the coining pressure in a range from about 348 psi (2.40 MPa) to about 398 psi (2.74 MPa) or of about 373 psi (2.57 MPa) and at the coining temperature in a range from about 670 °F (354 °C) to about 690 °F (366 °C) or of about 680 °F (360 °C) for a time in a range from about 4 min. (240 sec.) to about 6 min. (360 sec.) or for about 5 min. (300 sec.).

A further aspect of the embodiments includes any one or more of the above aspects, and further wherein quenching the resin comprises maintaining the resin at the quenching pressure in a range from about 838 psi (5.78 MPa) to about 908 psi (6.26 MPa) or of about 858 psi (5.92 MPa) and at the quenching temperature in a range from about 670 °F (354 °C) to about 690 °F (366 °C) or of about 680 °F (360 °C) for a time in a range from about 1 min. (60 sec.) to about 3 min. (180 sec.) or for about 2 min. (120 sec.).

A further aspect of the embodiments includes any one or more of the above aspects, and further wherein stabilizing the resin comprises maintaining the resin at the stabilizing temperature in a range from about 60 °F (16 °C) to about 90 °F (32 °C) or of about 75 °F (24 °C) for a time in a range from about 1 hr. (3600 sec.) to about 48 hr. (173,000 sec.).

A further aspect of the embodiments includes any one or more of the above aspects, and further wherein forming the diaphragm includes forming the diaphragm with the diaphragm diameter in a range from about 0.5 inches (13 mm) to about 6 inches (152 mm), from about 0.75 inches (19 mm) to about 4 inches (102 mm), from about 1 inch (25 mm) to about 3 inches (76 mm), or from about 1.5 inches (38 mm) to about 2.5 inches (64 mm) or of about 2 inches (51 mm).

A further aspect of the embodiments includes any one or more of the above aspects, and further wherein forming the diaphragm includes forming the diaphragm with the diaphragm thickness in a range from about 0.04 inches (1.0 mm) to about 0.12 inches (3.0 mm), from about 0.07 inches (1.8 mm) to about 0.10 inches (2.5 mm), or from about 0.07 inches (1.8 mm) to about 0.08 inches (2.0 mm) or of about 0.075 inches (1.9 mm).

A further aspect of the embodiments includes any one or more of the above aspects, and further
wherein the first fluoropolymer comprises the first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, and
wherein the second fluoropolymer comprises a second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer.

A further aspect of the embodiments includes any one or more of the above aspects, and further
wherein the first fluoropolymer consists essentially of the first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%,, 0.1 wt%, 0.03 wt%, or 0.01 wt% of the first non-tetrafluoroethylene comonomer, and
wherein the second fluoropolymer consists essentially of the second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer.

A further aspect of the embodiments includes any one or more of the above aspects, and further
wherein the first powder and the second powder together have a bimodal distribution of particle diameters and/or
wherein a difference between the average particle diameter of the first particle set and the average particle diameter of the second particle set is in a range from 0 µm to about 150 µm, from about 25 µm to about 125 µm, or from about 50 µm to about 100 µm or of about 75 µm.

A further aspect of the embodiments includes any one or more of the above aspects, and further wherein the composition comprises from about 10 wt% to about 90 wt% of the first fluoropolymer, from about 25 wt% to about 75 wt% of the first fluoropolymer, from about 40 wt% to about 60 wt% of the first fluoropolymer, or about 50 wt% of the first fluoropolymer.

A further aspect of the embodiments includes any one or more of the above aspects, and further
wherein the first non-tetrafluoroethylene comonomer of the first copolymer of the first fluoropolymer comprises a first perfluoro(alkyl vinyl ether) that is perfluoro(methyl vinyl ether), perfluoro(ethyl vinyl ether), perfluoro(propyl vinyl ether), perfluoro(n-propyl vinyl ether), perfluoro(1-methylethyl vinyl ether), or combinations thereof and
wherein the second non-tetrafluoroethylene comonomer of the second copolymer of the second fluoropolymer comprises a second perfluoro(alkyl vinyl ether) that is perfluoro(methyl vinyl ether), perfluoro(ethyl vinyl ether), perfluoro(propyl vinyl ether), perfluoro(*n*-propyl vinyl ether), perfluoro(1-methylethyl vinyl ether), or combinations thereof.

A further aspect of the embodiments includes any one or more of the above aspects, and further
wherein the first non-tetrafluoroethylene comonomer of the first copolymer of the first fluoropolymer consists essentially of a first perfluoro(alkyl vinyl ether) that is perfluoro(methyl vinyl ether), perfluoro(ethyl vinyl ether), perfluoro(propyl vinyl ether), perfluoro(n-propyl vinyl ether), perfluoro(1-methylethyl vinyl ether), or combinations thereof and
wherein the second non-tetrafluoroethylene comonomer of the second copolymer of the second fluoropolymer consists essentially of a second perfluoro(alkyl vinyl ether) that is perfluoro(methyl vinyl ether), perfluoro(ethyl vinyl ether), perfluoro(propyl vinyl ether), perfluoro(*n*-propyl vinyl ether), perfluoro(1-methylethyl vinyl ether), or combinations thereof.

A further aspect of the embodiments includes any one or more of the above aspects, and further
wherein the first particle set of the first fluoropolymer has the average particle diameter in a range from about 500 µm to about 600 µm or of about 550 µm,
wherein the first fluoropolymer comprises the first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer,
wherein the first non-tetrafluoroethylene comonomer of the first copolymer of the first fluoropolymer comprises at least one of perfluoro(methyl vinyl ether) and perfluoro(propyl vinyl ether),
wherein the first powder has the bulk density in a range from about 650 g/L to about 750 g/L or of about 700 g/L,
wherein the second particle set of the second fluoropolymer has the average particle diameter in a range from about 400 µm to about 525 µm or of about 475 µm,
wherein the second fluoropolymer comprises the second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer,
wherein the second non-tetrafluoroethylene comonomer of the second copolymer of the second fluoropolymer comprises at least one of perfluoro(methyl vinyl ether) and perfluoro(propyl vinyl ether),
wherein the second powder has the bulk density from about 650 g/L to about 750 g/L or of about 700 g/L,
wherein the composition comprises from about 25 wt% to about 75 wt% of the first fluoropolymer and from about 75 wt% to about 25 wt% of the second fluoropolymer or about 50 wt% of the first fluoropolymer and about 50 wt% of the second fluoropolymer, and
wherein a difference between the average particle diameter of the first particle set and the average particle diameter of the second particle set is in a range from about 25 µm to about 125 µm or is about 75 µm.

A further aspect of the embodiments includes any one or more of the above aspects, and further
wherein the first particle set of the first fluoropolymer has the average particle diameter in a range from about 500 µm to about 600 µm or of about 550 µm,
wherein the first fluoropolymer consists essentially of a first copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%,, 0.1 wt%, 0.03 wt%, or 0.01 wt% of a first non-tetrafluoroethylene comonomer,
wherein the first non-tetrafluoroethylene comonomer of the first copolymer of the first fluoropolymer comprises at least one of perfluoro(methyl vinyl ether) and perfluoro(propyl vinyl ether),
wherein the first powder has the bulk density in a range from about 650 g/L to about 750 g/L or of about 700 g/L,
wherein the second particle set of the second fluoropolymer has the average particle diameter in a range from about 400 µm to about 525 µm or of about 475 µm,
wherein the second fluoropolymer consists essentially of a second copolymer of tetrafluoroethylene comonomer and with a weight percentage being less than about 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer,
wherein the second non-tetrafluoroethylene comonomer of the second copolymer of the second fluoropolymer comprises at least one of perfluoro(methyl vinyl ether) and perfluoro(propyl vinyl ether),
wherein the second powder has the bulk density from about 650 g/L to about 750 g/L or of about 700 g/L,
wherein the composition comprises from about 25 wt% to about 75 wt% of the first fluoropolymer and from about 75 wt% to about 25 wt% of the second fluoropolymer or about 50 wt% of the first fluoropolymer and about 50 wt% of the second fluoropolymer, and
wherein a difference between the average particle diameter of the first particle set and the average particle diameter of the second particle set is in a range from about 25 µm to about 125 µm or is about 75 µm.

An aspect of the embodiments includes a method for forming a diaphragm, comprising:
selecting as a resin
   (i) a first powder including:
      a first particle set of a first fluoropolymer of an average particle diameter from about 475 µm to about 625 µm, from about 500 µm to about 600 µm, or from about 525 µm to about 575 µm or of about 550 µm,
      with weight percentages being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      with weight percentages being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the first fluoropolymer comprises at least one of polytetrafluoroethylene and a first copolymer of tetrafluoroethylene comonomer and with a weight percentage (wt%) being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer, and
      wherein the first powder has a bulk density in a range from about 600 g/L to about 800 g/L, from about 650 g/L to about 750 g/L, or from about 675 g/L to about 725 g/L or of about 700 g/L, or
   (ii) a second powder including:
      a second particle set of a second fluoropolymer of average particle diameter in a range from about 400 µm to about 550 µm, from about 400 µm to about 525 µm, from about 400 µm to about 500 µm, or from about 450 µm to about 500 µm or about 475 µm,
      with weight percentages being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      with weight percentage (wt%) being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the second fluoropolymer comprises at least one of a polytetrafluoroethylene and a second copolymer of tetrafluoroethylene comonomer and with a weight percentage being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer, and
      wherein the second powder has a bulk density in a range from about 600 g/L to about 800 g/L, from about 650 g/L to about 750 g/L, or from about 675 g/L to about 725 g/L or of about 700 g/L, or
   (iii) a composition, including:
      the first powder and the second powder,
preforming the resin, including:
   loading a pre-determined amount of the resin into a mold, and
   compressing the resin in the mold at a preforming pressure in a range from about 800 psi (5.5 MPa) to about 2400 psi (16.6 MPa), from about 1200 psi (8.2 MPa) to about 1800 psi (12.4 MPa), or from about 1400 psi (9.6 MPa) to about 1800 psi (12.4 MPa) or about 1600 psi (11.0 MPa),
sintering the resin at from about 680 °F (360 °C) to about 780 °F (416 °C) or from about 720 °F (382 °C) to about 740 °F (393 °C) or of about 730 °F (388 °C),
coining the resin by applying a coining pressure in a range from about 348 psi (2.40 MPa) to about 398 psi (2.74 MPa) or of about 373 psi (2.57 MPa) and a coining temperature in a range from about 630 °F (332 °C) to about 730 °F (389 °C) or from about 670 °F (354 °C) to about 690 °F (366 °C) or of about 680 °F (360 °C) and by stamping the resin,
quenching the resin by applying a quenching pressure in a range from about 838 psi (5.78 MPa) to about 908 psi (6.26 MPa) or of about 858 psi (5.92 MPa) and a quenching temperature in a range from about 630 °F (332 °C) to about 730 °F (388 °C) or from about 670 °F (354 °C) to about 690 °F (366 °C) or of about 680 °F (360 °C), and
stabilizing the resin at a stabilizing temperature in a range from about 40 °F (4 °C) to about 110 °F (43 °C) or from about 60 °F (16 °C) to about 90 °F (32 °C) or of about 75 °F (24 °C)
to form the diaphragm as the stabilized resin.

An aspect of the embodiments includes a method for forming the diaphragm, comprising:
selecting as the resin
   (i) the first powder including:
      the first particle set of the first fluoropolymer of the average particle diameter from about 475 µm to about 625 µm, from about 500 µm to about 600 µm, or from about 525 µm to about 575 µm or of about 550 µm,
      with weight percentages being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      with a weight percentage (wt%) being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the first fluoropolymer consists essentially of at least one of polytetrafluoroethylene and the first copolymer of tetrafluoroethylene comonomer and with a weight percentage (wt%) being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, and
      wherein the first powder has the bulk density in a range from about 600 g/L to about 800 g/L, from about 650 g/L to about 750 g/L, or from about 675 g/L to about 725 g/L or of about 700 g/L, or
   (ii) the second powder including:
      the second particle set of the second fluoropolymer of average particle diameter in a range from about 400 µm to about 550 µm, from about 400 µm to about 525 µm, from about 400 µm to about 500 µm, or from about 450 µm to about 500 µm or about 475 µm,
      with weight percentages being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of at least one of perfluoroether and perfluoro(propyl vinyl ether) (PPVE), and
      with a weight percentage (wt%) being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine,
      wherein the second fluoropolymer consists essentially of at least one of polytetrafluoroethylene and the second copolymer of tetrafluoroethylene comonomer and with a weight percentage (wt%) being less than about 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer, and
      wherein the second powder has the bulk density in a range from about 600 g/L to about 800 g/L, from about 650 g/L to about 750 g/L, or from about 675 g/L to about 725 g/L or of about 700 g/L, or
   (iii) the composition, including:
      the first powder and the second powder,
preforming the resin, including:
   loading the pre-determined amount of the resin into the mold, and
   compressing the resin in the mold at the preforming pressure in a range from about 800 psi (5.5 MPa) to about 2400 psi (16.6 MPa), from about 1200 psi (8.2 MPa) to about 1800 psi (12.4 MPa), or from about 1400 psi (9.6 MPa) to about 1800 psi (12.4 MPa) or about 1600 psi (11.0 MPa),
sintering the resin at from about 680 °F (360 °C) to about 780 °F (416 °C) or from about 720 °F (382 °C) to about 740 °F (393 °C) or of about 730 °F (388 °C),
coining the resin by applying the coining pressure in a range from about 348 psi (2.40 MPa) to about 398 psi (2.74 MPa) or of about 373 psi (2.57 MPa) and the coining temperature in a range from about 630 °F (332 °C) to about 730 °F (389 °C) or from about 670 °F (354 °C) to about 690 °F (366 °C) or of about 680 °F (360 °C) and by stamping the resin,
quenching the resin by applying the quenching pressure in a range from about 838 psi (5.78 MPa) to about 908 psi (6.26 MPa) or of about 858 psi (5.92 MPa) and the quenching temperature in a range from about 630 °F (332 °C) to about 730 °F (388 °C) or from about 670 °F (354 °C) to about 690 °F (366 °C) or of about 680 °F (360 °C), and
stabilizing the resin at the stabilizing temperature in a range from about 40 °F (4 °C) to about 110 °F (43 °C) or from about 60 °F (16 °C) to about 90 °F (32 °C) or of about 75 °F (24 °C)
to form the diaphragm as the stabilized resin.

An aspect of the embodiments includes a method for forming a diaphragm, comprising:
selecting as a resin
   (i) a first powder including:
      a first particle set of a first fluoropolymer of average particle diameter in a range from about 400 µm to about 700 µm, from about 475 µm to about 625 µm, from about 500 µm to about 600 µm, or from about 525 µm to about 575 µm or of about 550 µm,
      wherein the first fluoropolymer comprises at least one of polytetrafluoroethylene and a first copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a first non-tetrafluoroethylene comonomer, or
   (ii) a second powder including:
      a second particle set of a second fluoropolymer of average particle diameter in a range from about 325 µm to about 625 µm, from about 400 µm to about 550 µm, from about 400 µm to about 525 µm, from about 400 µm to about 500 µm, or from about 450 µm to about 500 µm or about 475 µm,
      wherein the second fluoropolymer comprises at least one of a polytetrafluoroethylene and a second copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of a second non-tetrafluoroethylene comonomer, or
   (iii) a composition, including:
      the first powder and the second powder,
optionally sifting the resin,
   wherein the sifting comprises allowing the resin to pass through a sifter having holes of diameter in a range from about 500 µm to about 1000 µm, from about 550 µm to about 750 µm, or from about 600 µm to about 700 µm,
preforming the resin, including:
   loading a pre-determined amount of the resin into a mold, and
   compressing the resin in the mold at a preforming pressure in a range from about 800 psi (5.5 MPa) to about 2400 psi (16.6 MPa), from about 1200 psi (8.2 MPa) to about 1800 psi (12.4 MPa), or from about 1400 psi (9.6 MPa) to about 1800 psi (12.4 MPa) or about 1600 psi (11.0 MPa) optionally for a time in a range from about 0.5 min. (30 sec.) to about 6 min. (360 sec.) or from about 1 min. (60 sec.) to about 4 min. (240 sec.) or about 3 min. (180 sec.),
sintering the resin, including:
   optionally increasing a temperature of the resin to a sintering temperature in a range from about 680 °F (360 °C) to about 780 °F (416 °C) or from about 720 °F (382 °C) to about 740 °F (393 °C) or of about 730 °F (388 °C),
   maintaining the temperature in a range from about 680 °F (360 °C) to about 780 °F (416 °C) or from about 720 °F (382 °C) to about 740 °F (393 °C) or of about 730 °F (388 °C) optionally for a time in a range from about 15 min. (900 sec.) to about 45 min. (2700 sec.) or for about 30 min. (1800 sec.), and
   optionally decreasing the temperature to a cooled temperature in a range from about 180 °F (82 °C) to about 220 °F (104 °C) or from about 190 °F (88 °C) to about 210 °F (99 °C) or of about 200 °F (93 °C),
coining the resin, including:
   maintaining the resin at a coining pressure in a range from about 348 psi (2.40 MPa) to about 398 psi (2.74 MPa) or of about 373 psi (2.57 MPa) and at a coining temperature in a range from about 630 °F (332 °C) to about 730 °F (389 °C) or from about 670 °F (354 °C) to about 690 °F (366 °C) or of about 680 °F (360 °C)
optionally for a time in a range from about 2 min. (120 sec.) to about 8 min. (480 sec.) or from about 4 min. (240 sec.) to about 6 min. (360 sec.) or for about 5 min. (300 sec.), and
   stamping the resin to coin the resin,
quenching the resin, including
   maintaining the resin at a quenching pressure in a range from about 838 psi (5.78 MPa) to about 908 psi (6.26 MPa) or of about 858 psi (5.92 MPa) and at a quenching temperature in a range from about 630 °F (332 °C) to about 730 °F (388 °C) or from about 670 °F (354 °C) to about 690 °F (366 °C) or of about 680 °F (360 °C) optionally for a time in a range from about 1 min. (60 sec.) to about 3 min. (180 sec.) or for about 2 min. (120 sec.), and
stabilizing the resin at a stabilizing temperature in a range from about 40 °F (4 °C) to about 110 °F (43 °C) or from about 60 °F (16 °C) to about 90 °F (32 °C) or of about 75 °F (24 °C) for a time in a range from about 1 hr. (3600 sec.) to about 48 hr. (173,000 sec.)
to form the diaphragm as the stabilized resin,
wherein the diaphragm comprises a diaphragm diameter and a diaphragm thickness.

An aspect of the embodiments includes a method for forming the diaphragm, comprising:
selecting as the resin
   (i) the first powder including:
      the first particle set of the first fluoropolymer of average particle diameter in a range from about 400 µm to about 700 µm, from about 475 µm to about 625 µm, from about 500 µm to about 600 µm, or from about 525 µm to about 575 µm or of about 550 µm,
      wherein the first fluoropolymer consists essentially of at least one of polytetrafluoroethylene and the first copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the first non-tetrafluoroethylene comonomer, or
   (ii) the second powder including:
      the second particle set of the second fluoropolymer of average particle diameter in a range from about 325 µm to about 625 µm, from about 400 µm to about 550 µm, from about 400 µm to about 525 µm, from about 400 µm to about 500 µm, or from about 450 µm to about 500 µm or about 475 µm,
      wherein the second fluoropolymer consists essentially of at least one of polytetrafluoroethylene and the second copolymer of tetrafluoroethylene comonomer and with a weight percentage (wt%) being less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of the second non-tetrafluoroethylene comonomer, or
   (iii) the composition, including:
      the first powder and the second powder,
sifting the resin,
   wherein the sifting comprises allowing the resin to pass through the sifter having holes of diameter in a range from about 500 µm to about 1000 µm, from about 550 µm to about 750 µm, or from about 600 µm to about 700 µm,
preforming the resin, including:
   loading the pre-determined amount of the resin into the mold, and
   compressing the resin in the mold at the preforming pressure in a range from about 800 psi (5.5 MPa) to about 2400 psi (16.6 MPa), from about 1200 psi (8.2 MPa) to about 1800 psi (12.4 MPa), or from about 1400 psi (9.6 MPa) to about 1800 psi (12.4 MPa) or about 1600 psi (11.0 MPa) for a time in a range from about 0.5 min. (30 sec.) to about 6 min. (360 sec.) or from about 1 min. (60 sec.) to about 4 min. (240 sec.) or about 3 min. (180 sec.),
sintering the resin, including:
   increasing the temperature of the resin to the sintering temperature in a range from about 680 °F (360 °C) to about 780 °F (416 °C) or from about 720 °F (382 °C) to about 740 °F (393 °C) or of about 730 °F (388 °C),
   maintaining the temperature in a range from about 680 °F (360 °C) to about 780 °F (416 °C) or from about 720 °F (382 °C) to about 740 °F (393 °C) or of about 730 °F (388 °C) for a time in a range from about 15 min. (900 sec.) to about 45 min. (2700 sec.) or for about 30 min. (1800 sec.), and
   decreasing the temperature to the cooled temperature in a range from about 180 °F (82 °C) to about 220 °F (104 °C) or from about 190 °F (88 °C) to about 210 °F (99 °C) or of about 200 °F (93 °C),
coining the resin, including:
   maintaining the resin at the coining pressure in a range from about 348 psi (2.40 MPa) to about 398 psi (2.74 MPa) or of about 373 psi (2.57 MPa) and at the coining temperature in a range from about 630 °F (332 °C) to about 730 °F (389 °C) or from about 670 °F (354 °C) to about 690 °F (366 °C) or of about 680 °F (360 °C) for a time in a range from about 2 min. (120 sec.) to about 8 min. (480 sec.) or from about 4 min. (240 sec.) to about 6 min. (360 sec.) or for about 5 min. (300 sec.), and
   stamping the resin to coin the resin,
quenching the resin, including
   maintaining the resin at the quenching pressure in a range from about 838 psi (5.78 MPa) to about 908 psi (6.26 MPa) or of about 858 psi (5.92 MPa) and at the quenching temperature in a range from about 630 °F (332 °C) to about 730 °F (388 °C) or from about 670 °F (354 °C) to about 690 °F (366 °C) or of about 680 °F (360 °C) for a time in a range from about 1 min. (60 sec.) to about 3 min. (180 sec.) or for about 2 min. (120 sec.), and
stabilizing the resin at the stabilizing temperature in a range from about 40 °F (4 °C) to about 110 °F (43 °C) or from about 60 °F (16 °C) to about 90 °F (32 °C) or of about 75 °F (24 °C) for a time in a range from about 1 hr. (3600 sec.) to about 48 hr. (173,000 sec.)
to form the diaphragm as the stabilized resin.

### BRIEF DESCRIPTION OF THE DRAWINGS

**Figure 1** shows an illustration of a diaphragm pump, including a diaphragm.
**Figure 2** shows an illustration of a device for compressing and/or heating resin to form a diaphragm.
**Figure 3A** shows images of an aggregation of resin following the preforming step and the sintering step.
**Figure 3B** shows an image of an aggregation of resin following the coining step.
**Figure 3C** shows an image of an aggregation of resin following the quenching step.
**Figure 3D** shows an image of a diaphragm following the punching of guide holes through it.
**Figure 3E** shows an image of a diaphragm following die cutting and part marking.
**Figure 4** shows a cartoon of a diaphragm and a plunger with images of a diaphragm.
**Figure 5** shows images of a diaphragm exhibiting cracking at the boss radius.
**Figure 6** shows a flowchart illustrating a processing protocol for forming a diaphragm.

### DETAILED DESCRIPTION OF NON-LIMITING EMBODIMENTS

Embodiments are discussed in detail below. In describing embodiments, specific terminology is employed for the sake of clarity. However, the embodiments are not intended to be limited to the specific terminology so selected. A person skilled in the relevant art will recognize that other equivalent parts can be employed and other methods developed without parting from the spirit and scope of the embodiments. All documents cited herein are hereby incorporated by reference in their entirety as if each had been individually incorporated. Any sections are used in this Detailed Description solely in order to orient the reader as to the general subject matter of each section; the description of a feature may span multiple sections, and headings should not be read as affecting the meaning of the description included in any section.

Compositions, for example, for use in forming a component, such as a diaphragm for a pump, are presented, and processes for forming a component, such as a diaphragm for a pump, are presented.

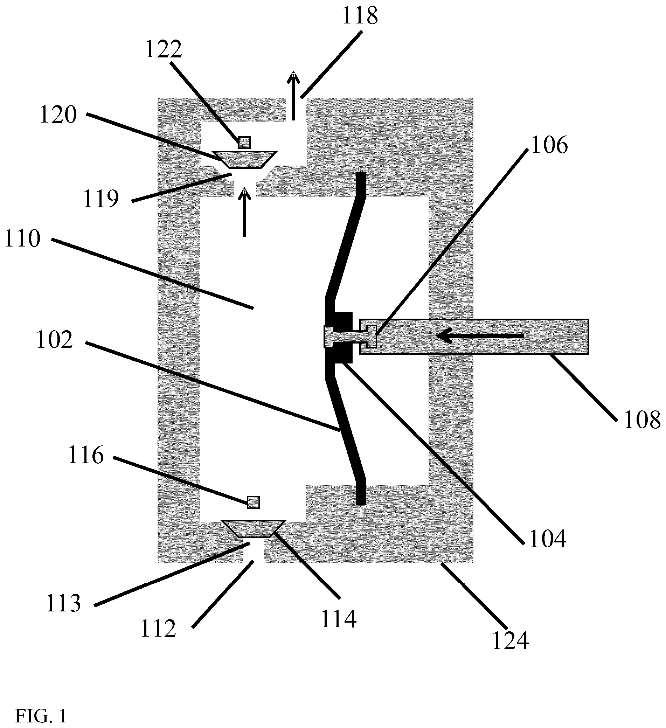

A basic diaphragm pump is shown in Fig. 1. A diaphragm pump (also known as a membrane pump) can be a positive displacement pump that uses a combination of the reciprocating action of a diaphragm 102 and suitable valves (check valves 113 and 119, butterfly valves, flap valves, or any other form of shut-off valves) on either side of a pump chamber 110 bounded by the diaphragm 102 to pump a fluid. In Fig. 1, the pump body 124 is shown. Fluid can be admitted to the pump through an inlet port 112. The fluid can be a gas, a liquid, or substance including a gas and/or a liquid, such as an aerosol, a slurry, a suspension, or a solution. An inlet check valve 113, including an inlet check valve disk 114 and an inlet check valve restraint 116, is shown. Within the pump, fluid can be in the pump chamber 110. The pumping action can be effectuated by a flexible diaphragm 102. The diaphragm 102 can include a boss 104, within which a stud 106 can be affixed. An actuator 108 can be affixed to an end of the stud 106 distal from the diaphragm 102. The actuator 108 can move in a reciprocating manner; the prime mover of the actuator 108 is not shown in Fig. 1. An outlet check valve 119, including an outlet check valve disk 120 and an outlet check valve restraint 122, is shown. Fluid can exit the pump through an outlet port 118. In Fig. 1, the actuator 108 is shown as moving into the pump (as shown by the arrow drawn on the actuator 108). The diaphragm 102 can seal the fluid within the pump chamber 110, and the movement of the diaphragm 102 farther into the pump chamber 110, as driven by the actuator 108, may reduce the volume of the pump chamber 110. This action may increase the pressure of the fluid in the pump chamber 110 to greater than that of the fluid at the inlet port 112 and to greater than that of the fluid at the outlet port 118, so that the inlet check valve 113 can be closed, i.e., the inlet check valve disk 114 can be seated, and so that the outlet check valve 119 can be open, i.e., the outlet check valve disk 120 may not be seated, and travel of the outlet check valve disk 120 can be restrained by the outlet check valve restraint 122. Movement of the fluid from the pump chamber 110 into the outlet check valve 119 is shown by an arrow, and movement of the fluid from the outlet check valve 119 through the outlet port 118 is shown by an arrow. After the actuator 108 reaches the limit of its travel, and the actuator 108 and diaphragm 102 then move in the opposite direction from that shown by the arrow on the actuator 108 in Fig. 1, the pressure of the fluid in the pump chamber 110 can decrease to less than that of the fluid at the inlet port 112 and to less than that of the fluid at the outlet port 118, so that the inlet check valve 113 can open, i.e., the inlet check valve disk 114 can then not be seated, and travel of the inlet check valve disk 114 can be restrained by the inlet check valve restraint 116. Fluid can then flow from the inlet port 112 through the inlet check valve 113 and into the pump chamber 110. The outlet check valve 119 can close, i.e., the outlet check valve disk 120 can be seated, so that fluid can not flow through the outlet check valve 119 or the outlet port 118. The reciprocating movement of the actuator 108 and diaphragm 102 can repeat indefinitely, with the result being a pulsatile pumping action of the fluid into the inlet port 112 and out of the outlet port 118. The configuration and construction of a diaphragm pump and/or the configuration, construction, location, function, and operation of a diaphragm 102 in a diaphragm pump can differ from what is shown in Fig. 1 and from what is described here.

The diaphragm 102 may be flexible, stretchable, and/or elastic, so that it can be moved by the actuator 108 to decrease the volume of the pump chamber 110 and move the fluid from the pump chamber 110 through the outlet check valve 119 and the outlet port 118, and so that it can be moved by the actuator 108 to increase the volume of pump chamber 110 and move the fluid from the inlet port 112 through the inlet check valve 113 into the pump chamber 110. The diaphragm 102 can have mechanical characteristics allowing it to flex and/or stretch during many cycles of the reciprocating movement of the actuator 108 without failure, for example, without failure resulting in leakage of fluid out of the pump chamber 110. The diaphragm 102 can have mechanical characteristics to withstand and not be unduly degraded by abrasive components of the fluid, for example, particles in an aerosol or slurry fluid. The diaphragm 102 can have chemical characteristics (or a combination of chemical and mechanical characteristics) to withstand chemical and physical characteristics of the fluid. For example, the diaphragm 102 can be not dissolved, unduly swollen, or otherwise degraded, e.g., through crazing, by the fluid. For example, the diaphragm 102 can be not molten by, can not undergo a transition from a rubbery state to a glassy state, and/or can not have its mechanical characteristics, e.g., tensile strength, degraded by a fluid at a high temperature or a low temperature of operation. Therefore, the selection of a suitable material for the diaphragm 102 can depend on characteristics, such as chemical (solvent properties), mechanical (abrasive properties), and temperature characteristics of the fluid. For example, if the fluid being pumped is an aggressive solvent, such as in an industrial chemical application, then the material of the diaphragm 102 can be selected not to be dissolved by that fluid.

The diaphragm 102 can also not have adverse effects on the fluid being pumped. For example, it may be important to avoid or minimize abraded particles of the diaphragm 102 entering the fluid and the fluid stream. For example, it may be important to avoid or minimize chemical compounds within the diaphragm 102, such as plasticizers, from leaching out of the diaphragm 102 and entering the fluid and the fluid stream. Therefore, the selection of a suitable diaphragm material can depend on the intended use of the fluid being pumped. For example, if the fluid being pumped is intended for use in a pharmaceutical application or another application in which it is important to maintain the purity of the fluid, then it may be important to avoid or to minimize abraded particles of or chemical compounds within the diaphragm 102 from entering the fluid or the fluid stream.

Polytetrafluoroethylene (PTFE), copolymers of PTFE (i.e., copolymers of the comonomer tetrafluoroethylene and another comonomer), blends of PTFE with another polymer (for example, to form a mutually soluble polymer alloy after melting), and/or other fluoropolymers can be useful as a diaphragm material. For example, the low friction exhibited by PTFE can make it suitable for use as a structural material or coating for bearings, gears, seals, gaskets, and liners, e.g., to improve the flow of highly viscous fluids (i.e., increase the volumetric flow for a given pumping power for a large viscosity fluid). For example, PTFE and copolymers and blends including PTFE can exhibit a high melting temperature (about 327 °C for PTFE), have good flexibility at low temperatures (e.g., temperatures as low as -79 °C), and be resistant to a wide range of aggressive solvents and chemicals (e.g., exhibit low solubility in a wide range of chemicals) and have suitable mechanical properties for use in a diaphragm 102. The properties (e.g., superior chemical and thermal properties) of PTFE and copolymers and blends including PTFE can make them suitable for use as materials for a diaphragm 102 for use in diaphragm pumps for pumping fluids in the chemical industry and for pumping fluids in the pharmaceutical industry and in other applications in which high purity must be maintained (i.e., with the fluid not being or only being minimally contaminated by the diaphragm 102).

PTFE and copolymers and blends including PTFE can be challenging to process into a structure, such as a diaphragm 102 for a diaphragm pump. For example, as mentioned above, PTFE has a high melting temperature and even when molten can exhibit a large viscosity that makes its processing through processes such as injection molding difficult or impossible. The inclusion of a small fraction of a comonomer, such as a fluorocomonomer, e.g., a perfluoro(alkylvinyl ether), along with tetrafluoroethylene comonomer in a fluorocopolymer, can result in the fluoropolymer having a decreased melting temperature and a decreased viscosity from those of PTFE, so that the fluorocopolymer can be more amenable to processing. However, government regulations and/or legislation may result in limits on the fraction of fluorocomonomer that can be incorporated with tetrafluoroethylene in a fluorocopolymer, for example, a PTFE copolymer. For example, there may be a U.S. Environmental Protection Agency (EPA) directive regarding perfluoroalkane (PFA) and/or perfluoro(propyl vinyl ether) (PPVE) additives. Production of the TFM 1600 modified PTFE fluoropolymer might end in year 2025.

This document presents compositions for use in forming a diaphragm 102 for a diaphragm pump, and this document presents processes for forming a diaphragm 102 for a diaphragm pump.

An embodiment includes a composition that includes a first powder and a second powder.

The first powder can include a first particle set of a first fluoropolymer of average particle diameter from about 475 µm to about 625 µm, from about 500 µm to about 600 µm, from about 525 µm to about 575 µm, or of about 550 µm, and include less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% perfluoroether and/or perfluoro(propyl vinyl ether) (PPVE), and include less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine. For example, by including less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine, the first powder can include a small amount of, a *de minimus* amount of, or no filler. The first fluoropolymer can include polytetrafluoroethylene (PTFE). Also or alternatively, the first fluoropolymer can include a copolymer of tetrafluoroethylene comonomer and less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% non-tetrafluoroethylene comonomer. For example, the non-tetrafluoroethylene comonomer can be a perfluoroether, such as a perfluoro(alkyl vinyl ether), e.g., perfluoro(propyl vinyl ether) (PPVE). The first powder can be of a bulk density from about 600 g/L to about 800 g/L, from about 650 g/L to about 750 g/L, from about 675 g/L to about 725 g/L, or of about 700 g/L. For example, the first powder can be the Teflon^{™} PTFE NXT 85 product of Chemours^{™}.

The second powder can include a second particle set of a second fluoropolymer of average particle diameter from about 400 µm to about 550 µm, from about 400 µm to about 525 µm, from about 400 µm to about 500 µm, from about 450 µm to about 500 µm, or of about 475 µm, and include less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% perfluoroether and/or perfluoro(propyl vinyl ether) (PPVE), and include less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine. For example, by including less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% of elements other than carbon and fluorine, the second powder can include a small amount of, a *de minimus* amount of, or no filler. The second fluoropolymer can include polytetrafluoroethylene (PTFE). Also or alternatively, the second fluoropolymer can include a copolymer of tetrafluoroethylene comonomer and less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% non-tetrafluoroethylene comonomer. For example, the non-tetrafluoroethylene comonomer can be a perfluoroether, such as perfluoro(propyl vinyl ether) (PPVE). The second powder can be of a bulk density from about 600 to about 800 g/L, from about 650 to about 750 g/L, from about 675 to about 725 g/L, or of about 700 g/L. For example, the second powder can be the Inoflon^{®} M290 product of Gujarat Fluorochemicals (GFL^{™}).

In this document, the term "average particle diameter" is meant to be the d50 (or D50) diameter of a set of particles, which is the diameter for which the particles in the set that have a smaller diameter have a cumulative mass (or, given approximately constant density, a cumulative volume) that is 50% (i.e., half) of the total mass (or, given approximately constant density, the total volume) of all the particles in the set. That is, as used herein, the "average particle diameter", d50, D50, and "mass median diameter" are equivalent terms and used interchangeably.

The composition including the first powder and the second powder can be of a bimodal distribution of particle diameters. For example, the difference between the average particle diameter of the first particle set of the first powder and the average particle diameter of the second particle set of the second powder can be from 0 µm to about 150 µm, from about 25 µm to about 125 µm, from about 50 µm to about 100 µm, or about 75 µm.

The first fluoropolymer of the first powder can have a tensile strength at about 23 °C (for example, 23 ± 2 °C under the ASTM D4894 test method) from about 25 MPa to about 31 MPa, from about 26 MPa to about 30 MPa, from about 27 MPa to about 29 MPa, or about 28 MPa. The second fluoropolymer of the second powder can have a tensile strength at about 23 °C (for example, 23 ± 2 °C under the ASTM D4894 test method) from about 25 MPa to about 31.5 MPa, from about 27 MPa to about 31.5 MPa, from about 29 MPa to about 31 MPa, or about 30 MPa. The first fluoropolymer of the first powder can have an elongation at break at about 23 °C (for example, 23 ± 2 °C under the ASTM D4894 test method) from about 350% to about 550%, from about 400% to about 500%, from about 425% to about 475%, or of about 450%. The second fluoropolymer of the second powder can have an elongation at break at about 23 °C (for example, 23 ± 2 °C under the ASTM D4894 test method) from about 300% to about 500%, from about 350% to about 475%, from about 375% to about 425%, or of about 400%.

The composition including the first powder and the second powder can include from about 10 wt% to about 90 wt% of the first fluoropolymer (e.g., from about 90 wt% to about 10 wt% of the second fluoropolymer), from about 25 wt% to about 75 wt% of the first fluoropolymer (e.g., from about 75 wt% to about 25 wt% of the second fluoropolymer), from about 40 wt% to about 60 wt% of the first fluoropolymer (e.g., from about 60 wt% to about 40 wt% of the second fluoropolymer), or about 50 wt% of the first fluoropolymer (e.g., about 50 wt% of the second fluoropolymer).

In the composition, the first particle set of the first fluoropolymer of the first powder and the second particle set of the second fluoropolymer of the second powder can be uniformly (or homogeneously) mixed or substantially uniformly (or homogenously) mixed. For example, the term "substantially uniformly mixed" can mean that the composition is uniformly mixed on a length scale L characteristic of that composition or is uniformly mixed on a length scale that is a small multiple of that length scale L, for example, from about 1 to about 10 times that length scale L. For example, if a composition includes particles having an average particle diameter of 550 µm, then the length scale L characteristic of that composition can be 550 µm, and the composition can be substantially uniformly mixed if uniformly mixed on a length scale from about 550 µm (1L) to about 5500 µm (10L). For example, the mixing of the first powder and the second powder in the composition can be done with a whisk. That is, the first particle set and the second particle set can be mixed to form a uniform (homogeneous) blend or a nearly uniform (homogeneous) blend.

In an embodiment of the composition, the first particle set of the first fluoropolymer can be of average particle diameter from about 525 µm to about 575 µm or of about 550 µm, the first fluoropolymer can include a copolymer of tetrafluoroethylene comonomer and less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% non-tetrafluoroethylene comonomer, and the first powder can be of a bulk density from about 675 g/L to about 725 g/L or of about 700 g/L, and the second particle set of the second fluoropolymer can be of average particle diameter from about 400 µm to about 500 µm or of about 475 µm, the second fluoropolymer can include a copolymer of tetrafluoroethylene comonomer and less than about 2 wt%, 1.5 wt%, 1.2 wt%, 1 wt%, 0.8 wt%, 0.6 wt%, 0.5 wt%, 0.4 wt%, 0.3 wt%, 0.2 wt%, 0.1 wt%, 0.03 wt%, or 0.01 wt% non-tetrafluoroethylene comonomer, and the second powder can be of bulk density from about 675 g/L to about 825 g/L or of about 700 g/L.

A method includes forming a diaphragm 102. For example, the diaphragm 102 can be for a diaphragm pump (also known as a membrane pump), which is a positive displacement pump, which pumps a fluid by inducing a reciprocating action of the diaphragm 102, with valves (such as one-way valves, e.g., check valves 113 and 119, butterfly valves, or flap valves) on either side of the diaphragm 102 (see Fig. 1).

The method can include selecting as a resin the first powder discussed above, the second powder discussed above, or the composition including the first powder and the second powder as discussed above. The method can include sifting the resin, for example, by allowing the resin to pass (e.g., under the influence of gravity) through a sifter having holes of diameter from about 500 µm to about 1000 µm, from about 550 µm to about 750 µm, or from about 600 µm to about 700 µm.

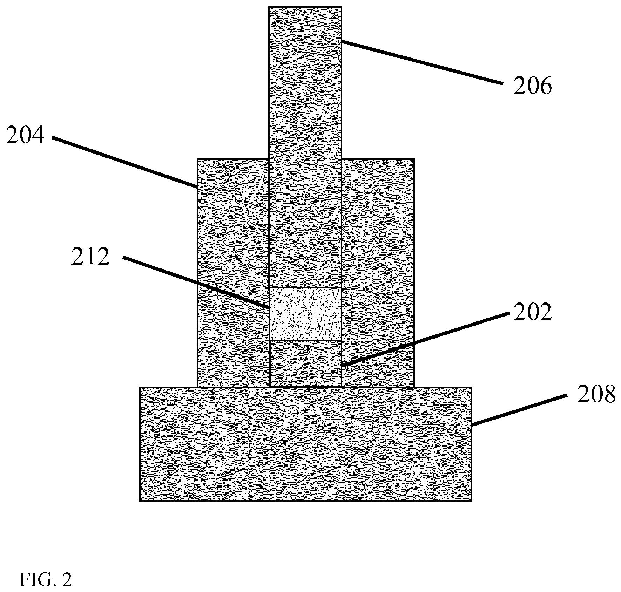

Figure 2 illustrates (as a cross section) an assembly or device that can be used to compress and/or heat (or cool) the resin to form the diaphragm 102. An anvil 202 can remain stationary during the compression process. The anvil 202 can rest on a base 208. The anvil 202 can be surrounded by a cylinder 204 that can also rest on the base 208. (The outer surface of the cylinder 204 may or may not be axisymmetric.) A plunger 206 can fit tightly and slidably into a space within the cylinder 204. The space within the cylinder 204 and the matching plunger 206 can be cylindrical or can have a non-axisymmetric form, such as that of a translated ellipse, a prism, a right prism, a right rectangular prism, or a right square prism. The prime mover of the plunger 206 is not shown in Fig. 2. The lower face of the plunger 206, the top of the anvil 202, and the surface of the cylinder 204 bounding the space within the cylinder 204 can be considered to form a mold. The resin 212 can be loaded into the space within the cylinder 204 above the anvil 202. The plunger 206 can then be inserted into the space within the cylinder 204. For example, the diameter of the space within the cylinder 204 (inside diameter) can be about 13 mm, and the depth from the top of the cylinder 204 to the top face of the anvil 202 can be about 25 mm.

Force can be applied to the plunger 206 to lower it towards the anvil 202 and compress the resin 212. The force can be applied to the plunger 206 to adjust the pressure on the resin 212 to a predetermined value. The plunger 206 can fit tightly into the space within the cylinder 204, so that no resin 212 or a minimal amount of resin 212 escapes the mold into a void between the plunger 206 and the cylinder 204. Heating (or cooling) can be applied to one or more of the anvil 202, base 208, cylinder 204, and plunger 206 to adjust the temperature of the resin 212 to a predetermined value. The resin 212 can be maintained at the predetermined pressure and temperature for a predetermined period of time. After that predetermined period of time, the plunger 206 can be raised and/or the cylinder 204, anvil 202, and base 208 can be disassembled to remove the resin 212, which may have been formed into a continuous article, such as a diaphragm 102. Not all detailed features that may be included are shown in Fig. 2. For example, the lower face of the plunger 206 may include a recessed volume to allow for the formation of a boss 104 that rises above the rest of a diaphragm 102 and/or a recessed volume to accommodate a stud 106 that can be located in the boss 104 and/or the diaphragm 102. Alternatively, the upper face of the anvil 202 may include a recessed volume to allow for the formation of a boss 104 and/or a recessed volume to accommodate a stud 106 that can be located in the boss 104 and/or diaphragm 102. A person of skill in the art would understand that a different assembly or device than that shown in Fig. 2 can be used to compress and adjust the temperature of the resin 212, for example, to form an article from the resin 212, such as a diaphragm 102.

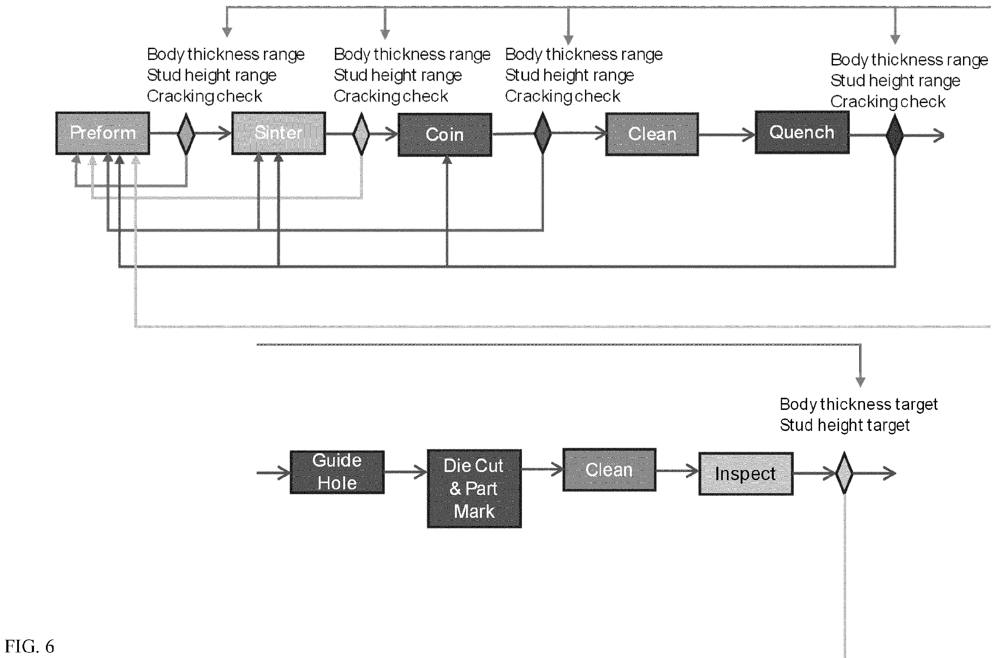

Methods (processes) that can be used to form (mold) the diaphragm 102 and aggregations of resin 212 and diaphragms 102 formed following various steps of a method are illustrated in Figs. 2-4 and 6. A flowchart illustrating a processing protocol for forming a diaphragm 102 is shown in Fig. 6.

The resin, which can be, for example, PTFE, a PTFE copolymer (or a chemically modified PTFE), a blend of PTFE and a PTFE copolymer, or a blend of PTFE copolymers, for example, in the form of a powder (as a set of particles) can be prepared. That is, the component or components of the resin and predetermined amounts of each component in the resin can be selected. For example, each component of a blend can be measured (e.g., by weighing or volumetrically) to have a predetermined amount of each component in the resin. The resin can be sifted. The resin can be mixed, for example, using a whisk, to be uniform (or homogeneous), nearly uniform (or nearly homogeneous), or substantially uniform (or substantially homogeneous). These steps of resin selection and preparation represent decision variables.

In a method, before preforming the resin, the mold can be cleaned. For example, the mold can be washed with soap and water and allowed to dry and/or scoured with a scouring pad. In a method, before preforming the resin, the mold can be lubricated by various approaches. For example, a hydrocarbon oil or grease, a silicone oil or grease, and/or a fluorinated oil or grease (such as a fluoroether-based oil or grease) can be applied to lubricate the mold. Such cleaning and/or lubrication of the mold represents a decision variable.

In a preforming step (illustrated by the first rectangle at top left in the flowchart in Fig. 6), resin (which can be, for example, PTFE, a PTFE copolymer, a blend of PTFE and a PTFE copolymer, or a blend of PTFE copolymers, for example, in the form of a powder (as a set of particles)) can be weighed to select a predetermined amount (charge). That predetermined amount (charge) of resin can be placed into the mold and subjected to pressure (high pressure); the maximum pressure to which the resin is subjected can be a predetermined value. The resin can be subjected to a predetermined rate of compression (strain rate). The resin can be allowed to settle (dwell) for a predetermined period of time. These parameters represent decision variables. Phenomena that can occur during preforming and settling include restacking and/or rearrangement of the resin particles with reduction of void space in (increase in bulk density of) and transfer of pressure between regions of the resin. Deformation of the particles can occur, for example, at points where two particles slide relative to each other; such elastic deformation can be reversible. Plastic flow of the particles can take place, for example, at contact areas between the particles; such plastic flow can be irreversible.

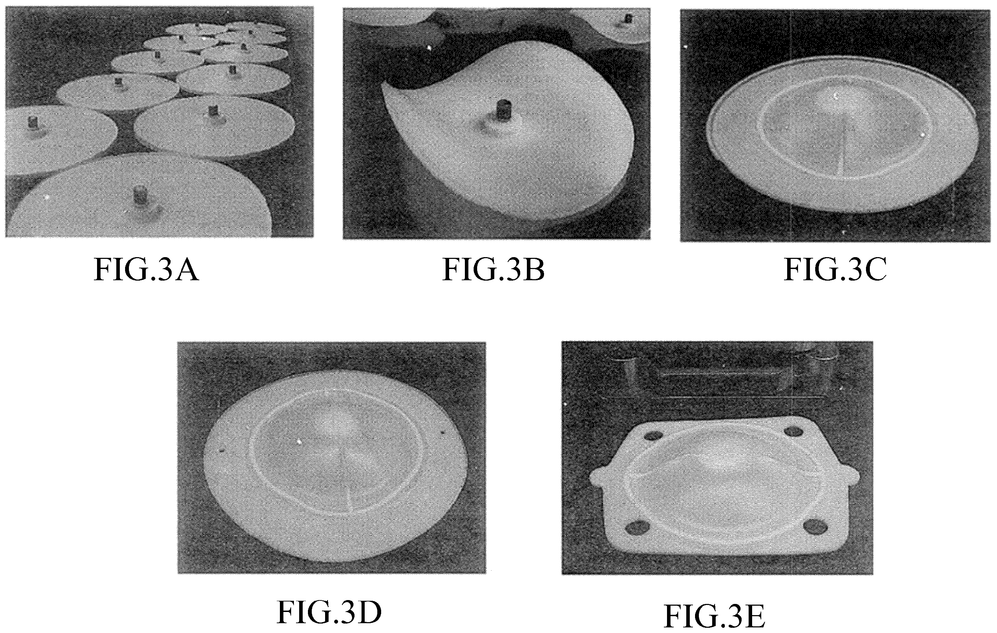

In a sintering step (illustrated by the second rectangle from the top left start in the flowchart in Fig. 6), the mold can be heated, so that the particles of the resin (for example, the resin powder) sinter (fuse) into an aggregation (a mass). The resin can be subjected to a predetermined maximum temperature. The rate of temperature change can be predetermined. The time for which the resin can be subjected to the sintering step (dwell time) can be predetermined. These parameters represent decision variables. Phenomena that can occur during sintering include densification (an increase in density) of the aggregation; this can be a bulk phenomenon. Melting and coalescence of the resin particles can occur, and subsequent crystallization or solidification of the resin material can occur. Images of the aggregation following the preforming step and the sintering step are shown in Fig. 3A.

In a coining step (illustrated by the third rectangle from the top left start in the flowchart in Fig. 6), the aggregation can be stamped to remove material from the outer perimeter of the aggregation. The resin can be subjected to a predetermined maximum pressure and to a predetermined temperature. The time for which the resin can be subjected to the coining step (dwell time) can be predetermined. These parameters represent decision variables. Following coining, the aggregation can have a neat, well-defined perimeter. The aggregation can then have a circular form (i.e., the perimeter can be a circumference); however, the aggregation can also have a different form, such as of an ellipse or polygon. An image of the aggregation following the coining step is shown in Fig. 3B.

The aggregation or resin or diaphragm 102 can be cleaned as an intermediate step (illustrated by the fourth rectangle from the top left start in the flowchart in Fig. 6 and the eighth rectangle from the top left start in the flowchart in Fig. 6) in the process, for example, after a coining step and before a quenching step and/or after a die cutting and part marking step and before an inspection step.

A quenching step (illustrated by the fifth rectangle from the top left start in the flowchart in Fig. 6) can bring the aggregation to its final thickness and density. The resin can be subjected to a predetermined maximum pressure and to a predetermined temperature. The time for which the resin can be subjected to the quenching step (dwell time) can be predetermined. These parameters represent decision variables. Phenomena that can occur during quenching include contraction and densification of the aggregation. An image of the aggregation following the quenching step is shown in Fig. 3C. The aggregation can then be stabilized at a predetermined temperature to form the diaphragm 102 (as the stabilized resin).

The diaphragm 102 can then have a guide hole or guide holes punched (installed) into (through) it. Such a step is illustrated by the sixth rectangle from the top left start in the flowchart in Fig. 6; that is, the flowchart continues from the quenching step, the fifth rectangle from left in the top series in Fig. 6, to the guide hole punching step, the sixth rectangle (the first rectangle from left in the bottom series in Fig. 6). An image of a diaphragm 102 with two guide holes punched into it is shown in Fig. 3D.

The diaphragm 102 can then be die cut to a desired shape, for example, with any additional features, such as tabs and/or holes; the diaphragm 102 can also be part marked. Such a step is illustrated by the seventh rectangle from the top left start in the flowchart in Fig. 6. For example, the shape of the diaphragm 102 following die cutting can allow the diaphragm 102 to be mounted inside a diaphragm pump. An image of a diaphragm 102 following die cutting and part marking is shown in Fig. 3E.

A final inspection of the diaphragm 102 can be performed following the die cutting and part marking step, for example, to ensure that there is no cracking or undesired deformation of the diaphragm 102. Such a step is illustrated by the ninth rectangle from the top left start in the flowchart in Fig. 6. For example, such inspection can be done manually, that is, visually by a human technician, and/or such inspection can be done automatically by a machine, for example, by an electronic camera that provides input to a computer with image processing software.

The following is a summary of an example of a method for forming a diaphragm 102. The process can begin by preforming virgin powder as the resin in an environmentally-controlled room. After preforming, checks can be made to confirm that there is no cracking in the aggregation of the resin or the diaphragm 102, and that part thickness and stud height are within the desired range at this stage; for example, for a 2.00 inch (in.) (51 mm) diameter part (diaphragm 102), the desired range of the stud height may be 0.478 - 0.482 inches (12.1 - 12.2 mm) and the desired range of part (diaphragm 102) thickness may be 0.088 - 0.092 inches (2.23 - 2.34 mm). After a part (diaphragm 102) is preformed to the desired shape, it can be oven-sintered following a prescribed cycle. Sintering allows the preformed powder to coalesce and fuse, but may also cause slight gelling, making part (diaphragm 102) dimensions increase. After sintering, checks can be made to confirm that there is no cracking, and that part thickness and stud height are each within the desired range at this stage; for example, for a 2.00 inch (51 mm) part (diaphragm 102), the desired range of stud height may be 0.490 - 0.500 inches (12.4 - 12.7 mm) and the desired range of part (diaphragm 102) thickness may be 0.090 - 0.095 inches (2.29 - 2.41 mm). The part (diaphragm 102) can then be coined to a desired shape. After coining, checks can be made to confirm no cracking, and that part (diaphragm 102) thickness and stud height are each within the desired range at this stage; for example, for a 2.00 inch (51 mm) part (diaphragm 102), the desired range of stud height may be 0.478 - 0.482 inches (12.1 - 12.2 mm) and the desired range of part (diaphragm 102) thickness may be 0.092 - 0.095 inches (2.34 - 2.41 mm). After coining, the part (diaphragm 102) can be cleaned and then quenched. The time between the quench oven and the quench press can be less than 6 seconds. After quenching, checks can be made to confirm no cracking, and that part thickness and stud height are within the desired range at this stage; for example, for a 2.00 inch (51 mm) part (diaphragm 102), the desired range of stud height may be 0.305 - 0.325 (7.75 - 8.26 mm) and the desired range of part (diaphragm 102) thickness may be 0.070 - 0.080 (1.78 - 2.03 mm). After quenching, the part (diaphragm 102) can be allowed to stabilize at 75 °F (24 °C). After stabilizing, guide holes can be punched through the part (diaphragm 102), and the part (diaphragm 102) can be die cut to the final desired shape, stamp-marked, cleaned, and subjected to a final inspection.

Several process factors (variables), among others, that can affect the properties of the diaphragm 102 include, for example, the following:
Powder factors: Powder type, for example, PTFE, a PTFE copolymer, a blend of PTFE and a PTFE copolymer, or a blend of PTFE copolymers; and powder preparation, for example, mixing or stirring of a blend prior to subjecting the blend to pressure and/or elevated temperature.
Tooling factors: Form (shape) of the mold; the mold surface, for example, roughness of the surface of the mold; material of which the mold is constructed; and any lubricant applied to the surface of the mold.
Process factors: Mass (weight) of the resin (charge) placed into the mold; the maximum pressure applied to the mold; the compression rate (which can be expressed as strain rate) applied to the resin in the mold; and the time period allowed for settling of resin in the mold.
Objectives of a process for forming a diaphragm 102 can include the following: minimizing development time, for example, for identifying suitable process parameters for forming a new diaphragm 102 (e.g., a diaphragm 102 of a different diameter and/or thickness); using data obtained during a development phase to optimize the process (e.g., to minimize the number of defective diaphragms formed); using real time visual cues, observed by a human technician or by a machine that displays its results; and retaining information collected during development in a data depository or knowledge base.

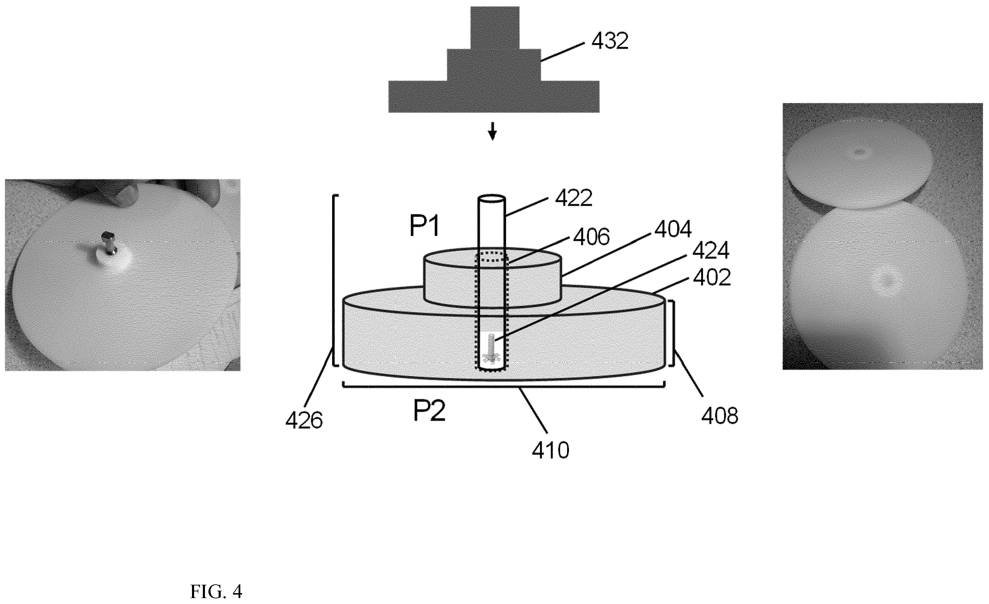

In Fig. 4, at the (horizontal) center is shown a cartoon of a diaphragm 402, which has a boss (a raised portion) 404. The diaphragm thickness (or thickness of an aggregation of the resin or of the resin) 408 and diaphragm diameter 410 are indicated. A space 406 within the center of the boss 404, which may extend into the diaphragm 402, is shown by dotted lines. A stud 422 can be within the space 406 within the center of the boss 404. The stud 422 can be secured to the diaphragm 402 and/or the boss 404, for example by a screw or an assembly of a nut (e.g., a T-nut or flanged nut) and a screw 424. The stud height 426 is indicated. A representation of the plunger 432 that compresses the resin by moving in the direction of the arrow below the plunger 432 to form the diaphragm 402 with its boss 404 is shown. Not all details of the plunger 432 are shown; for example, a volumetric recess to accommodate a stud 422 is not shown. The movement of the plunger 432 can result in a pressure differential being imposed on the resin, the aggregation of resin, and/or the diaphragm 402 formed. The pressure P1 at the top of the resin, the aggregation of resin, and/or the diaphragm 402 and the boss 404 can be greater than the pressure P2 at the bottom of the resin, the aggregation of resin, and/or the diaphragm 402. An image of two diaphragms 402 with the boss 404 visible in the center of each is at right in Fig. 4. An image of a diaphragm 402 with the boss 404 and stud 422 visible in the center is at left in Fig. 4.

The method can include preforming the resin, for example, by loading a pre-determined amount of the resin into a mold, and compressing the resin in the mold at a pressure from about 800 pounds per square inch (psi) (5.5 MPa) to about 2400 psi (16.6 MPa), from about 1200 psi (8.2 MPa) to about 1800 psi (12.4 MPa), from about 1400 psi (9.6 MPa) to about 1800 psi (12.4 MPa), or of about 1600 psi (11.0 MPa) for a time period from about 0.5 minutes (min.) (30 seconds (sec.)) to about 6 min. (360 sec.), from about 1 min. (60 sec.) to about 4 min. (240 sec.), or of about 3 min. (180 sec.).

The method can include sintering the resin, for example, by increasing the temperature of the resin to a sintering temperature from about 680 °F (360 °C) to about 780 °F (416 °C), from about 720 °F (382 °C) to about 740 °F (393 °C), or of about 730 °F (388 °C), maintaining the temperature from about 680 °F (360 °C) to about 780 °F (416 °C), from about 720 °F (382 °C) to about 740 °F (393 °C), or at about 730 °F (388 °C) for a time period from about 15 min. (900 sec.) to about 45 min. (2700 sec.) or for about 30 min. (1800 sec.), and decreasing the temperature to a cooled temperature from about 180 °F (82 °C) to about 220 °F (104 °C), from about 190 °F (88 °C) to about 210 °F (99 °C), or of about 200 °F (93 °C). For example, increasing the temperature of the resin to the sintering temperature can include increasing the temperature at a rate of about 90 ± 10 °F/hr. (0.0139 ± 0.0015 °C/sec.) to about 230 °F (110 °C), maintaining the temperature of about 230 °F (110 °C) for about 30 min. (1800 sec.), increasing the temperature at a rate of about 144 ± 10 °F/hr. (0.022 ± 0.0015 °C/sec.) to about 585 °F (307 °C), and increasing the temperature at a rate of about 144 ± 10 °F/hr. (0.022 ± 0.0015 °C/sec.) to the sintering temperature. For example, decreasing the temperature to a cooled temperature can include decreasing the temperature at a rate of about 260 ± 10 °F/hr. (0.040 ± 0.0015 °C/sec.) to about 600 ± 10 °F (316 ± 6 °C), decreasing the temperature at a rate of about 40 °F/hr. (0.0062 °C/sec.) to about 580 °F (304 °C), and decreasing the temperature to the cooled temperature.

The method can include coining the resin, for example, by maintaining the resin at a coining pressure from about 348 psi (2.40 MPa) to about 398 psi (2.74 MPa) or of about 373 psi (2.57 MPa) and at a coining temperature from about 630 °F (332 °C) to about 730 °F (389 °C), from about 670 °F (354 °C) to about 690 °F (366 °C), or of about 680 °F (360 °C) for a time period from about 2 min. (120 sec.) to about 8 min. (480 sec.), from about 4 min. (240 sec.) to about 6 min. (360 sec.), or of about 5 min. (300 sec.), and stamping the resin to coin the resin. For example, coining can include (precision) stamping that subjects the resin to stress that can be sufficiently high to cause plastic flow and/or elastic deformation on and or near the surface of the resin.

The method can include quenching the resin, comprising maintaining the resin at a quenching pressure from about 838 psi (5.78 MPa) to about 908 psi (6.26 MPa) or of about 858 psi (5.92 MPa) and at a quenching temperature from about 630 °F (332 °C) to about 730 °F (388 °C), from about 670 °F (354 °C) to about 690 °F (366 °C), or of about 680 °F (360 °C) for a time period from about 1 min. (60 sec.) to about 3 min. (180 sec.) or of about 2 min. (120 sec.). The method can include stabilizing the resin at a stabilizing temperature from about 40 °F (4 °C) to about 110 °F (43 °C), from about 60 °F (16 °C) to about 90 °F (32 °C), or about 75 °F (24 °C), for example, for a time period from about 1 hour (hr.) (3600 sec.) to about 48 hr. (173,000 sec.). The diaphragm 402 can be formed as (i.e., can be) the stabilized resin.

The resin in the mold can be compressed and placed under pressure by the action of a plunger 432 (see Fig. 4). Without being bound by theory, the action of the plunger 432 can result in a pressure gradient, ranging from a first pressure (P1) where the plunger 432 contacts the resin, to a second pressure (P2) on the side of the resin opposite the plunger 432 (i.e., the bottom of the resin). The first pressure (P1) can be greater than the second pressure (P2).

The preforming, sintering, coining, quenching, and stabilizing of the resin can be conducted with a stud 422 in the resin, so that the diaphragm 402 formed includes the stud 422. For example, the stud 422 can be located in or near to the center of the resin and/or diaphragm 402 formed. For example, the stud 422 can be formed of a metal, such as steel, stainless steel, aluminum, an alloy, or another metal, or another material. The stud 422 can be used to fit the diaphragm 402 into a diaphragm pump for which the diaphragm 402 can be intended as a component. For example, the stud 422 can be used in the diaphragm pump to induce the reciprocating action of the diaphragm 402 to induce pumping (flow) of a fluid (such as a slurry, a liquid, or a gas) through the diaphragm pump. A stud height 426 can be the distance between the top of the stud 422 and a bottom of the resin or diaphragm 402 (opposite of the top of the stud 422) (this is illustrated in Fig. 4). For example, the stud height 426 can be from about 0.05 inches (in.) (1.3 mm) to about 2 inches (51 mm), from about 0.1 inches (2.5 mm) to about 1 inch (25 mm), from about 0.1 inches (2.5 mm) to about 0.7 inches (18 mm), from about 0.2 inches (5 mm) to about 0.6 inches (15 mm), from about 0.305 inches (7.75 mm) to about 0.5 inches (13 mm), from about 0.3 inches (8 mm) to about 0.5 inches (13 mm), from about 0.305 inches (7.75 mm) to about 0.325 inches (8.26 mm), about 0.315 inches (8.00 mm), or about 0.3 inches (8 mm).

After stabilization, that is, after formation of the diaphragm 402, a guide hole or guide holes can be punched through the diaphragm 402. The diaphragm 402 can be die cut, for example, to have a shape and/or additional holes to fit into a diaphragm pump for which the diaphragm 402 can be intended as a component. The diaphragm 402 can be stamp (part) marked, for example, to display a part number associated with the diaphragm 402.

The diaphragm 402 can have a diaphragm diameter 410 and a diaphragm thickness 408, as illustrated in Fig. 4. For example, the diaphragm diameter 410 can be from about 0.12 inches (in.) (3.0 mm) to about 16 inches (406 mm), from about 0.25 inches (6.4 mm) to about 10 inches (254 mm), from about 0.5 inches (13 mm) to about 6 inches (152 mm), from about 0.5 inches (13 mm) to about 4 inches (102 mm), from about 1 inch (25 mm) to about 3 inches (76 mm), from about 1.5 inches (38 mm) to about 2.5 inches (64 mm), or about 2 inches (51 mm). For example, the diaphragm thickness 408 can be from about 0.01 inches (0.3 mm) to about 0.4 inches (10 mm), from about 0.02 inches (0.5 mm) to about 0.25 inches (6.4 mm), from about 0.02 inches (0.5 mm) to about 0.15 inches (3.8 mm), from about 0.04 inches (1.0 mm) to about 0.12 inches (3.0 mm), from about 0.07 inches (1.8 mm) to about 0.10 inches (2.5 mm), from about 0.07 inches (1.8 mm) to about 0.08 inches (2.0 mm), or about 0.075 inches (1.9 mm).

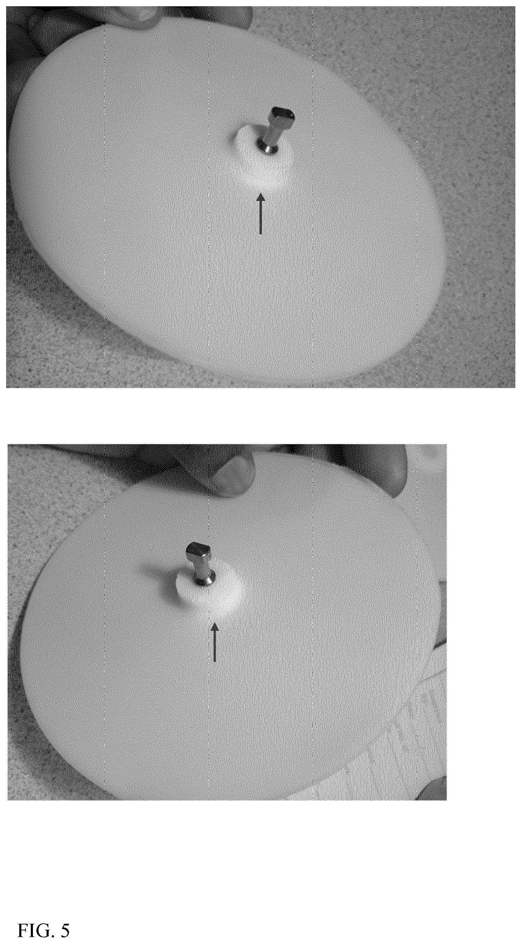

The method for forming the diaphragm 402 can include inspecting the resin for cracking in the resin (that is, in the aggregation of the resin or the component, part, or article that can be formed from the resin prior to the completion of formation of the component, part, or article as the diaphragm 402) following the preforming of the resin. For example, inspecting the resin for cracking can include visually inspecting the resin, for example, a human operator or technician visually inspecting the resin and/or a machine, e.g., a camera and a computer with image-processing software, visually inspecting the resin. For example, such cracking (formation of a crack in the resin) may occur where the boss 404 (a raised (elevated) portion around the center of the resin, component, or part that can become the diaphragm 402) rises from the remainder of the resin, component, or part that can become the diaphragm, that is, at the boss radius. This is illustrated in Fig. 5; on each image of a component (diaphragm 402) the location of a crack at the boss radius is illustrated by the arrow. Larger-sized diaphragms 402, for example, diaphragms 402 of a larger diameter, may be more susceptible to cracking unless the resin is carefully selected and processing parameters are carefully selected and controlled. The method for forming the diaphragm 402 can include measuring the thickness of the resin (resin thickness) (see Fig. 4) following the preforming. The method for forming the diaphragm can include measuring the stud height 426 (see Fig. 4) following the preforming. For example, the measuring of the thickness of the resin and/or the measuring of the stud height 426 can be manually done by a human operator or technician, e.g., with a ruler and/or a caliper, or automatically or semiautomatically done by a machine, e.g., a camera and a computer with image-processing software. The method (process) for forming the diaphragm 402 can be ended if the resin is cracked, the thickness of the resin differs (deviates) from a target post-preforming resin thickness by more than about 5%, 3%, 2.2%, 2%, 1%, or 0.5% allowed tolerance, for example, if the thickness of the resin differs by more than 0.002 inches (in.) (0.05 mm) allowed tolerance from a target post-preforming resin thickness of 0.090 inches (2.29 mm), and/or the stud height 426 differs (deviates) from a target post-preforming stud height by more than about 6%, 5%, 4%, 3%, 2%, 1%, 0.8%, 0.6%, 0.5%, 0.42%, 0.4%, 0.3%, 0.2%, or 0.1% allowed tolerance, for example, if the stud height 426 differs by more than 0.002 inches (0.05 mm) allowed tolerance from a target post-preforming stud height of 0.480 inches (12.2 mm). In the flowchart of Fig. 6, this checking for cracking of the resin, measuring of resin thickness, and measuring of stud height 426 is shown as the diamond representing a decision to the right of the rectangle representing the preforming step. If the resin is cracked, the measured post-preforming resin thickness deviates by more than the allowed tolerance, and/or the measured stud height 426 deviates by more than the allowed tolerance, changes can be made to the parameters of the method (process), for example, to the pressure on and/or dwell time of the resin in the mold during the preforming of the resin, to avoid cracking, to have the thickness of the resin be within the allowed tolerance of the target post-preforming resin thickness, and/or to have the stud height 426 be within the allowed tolerance of the target post-preforming stud height in a subsequent run of the method (process) for forming the diaphragm.

The method for forming the diaphragm can include inspecting the resin for cracking in the resin, measuring the thickness of the resin, and/or measuring the stud height 426 following the sintering of the resin. The method (process) for forming the diaphragm 402 can be ended, if the resin is cracked, the thickness of the resin differs from a target post-sintering resin thickness by more than about 7%, 5%, 3%, 2.7%, 2%, 1%, or 0.5% allowed tolerance, for example, if the thickness of the resin differs by more than 0.0025 inches (in.) (0.064 mm) allowed tolerance from a target post-sintering resin thickness of 0.0925 inches (2.34 mm), and/or the stud height 426 differs from a target post-sintering stud height by more than about 5%, 3%, 2%, 1%, 0.5%, or 0.2% allowed tolerance, for example, if the stud height 426 differs by more than 0.005 inches (0.13 mm) allowed tolerance from a target post-sintering stud height of 0.495 inches (12.6 mm). In the flowchart of Fig. 6, this checking for cracking of the resin, measuring of resin thickness, and measuring of stud height 426 is shown as the diamond representing a decision to the right of the rectangle representing the sintering step. If the resin is cracked, the measured post-sintering resin thickness deviates by more than the allowed tolerance, and/or the measured post-sintering stud height deviates by more than the allowed tolerance, changes can be made to the parameters of the method (process), for example, to the pressure on, rate of temperature change of, temperature of, and/or dwell time of the resin during the sintering of the resin, to avoid cracking, to have the thickness of the resin be within the allowed tolerance of the target post-sintering resin thickness, and/or to have the stud height 426 be within the allowed tolerance of the target post-sintering stud height in a subsequent run of the method (process) for forming the diaphragm 402.

The method for forming the diaphragm 402 can include inspecting the resin for cracking in the resin, measuring the thickness of the resin following the coining of the resin, and/or measuring the stud height 426 following the coining of the resin. The method (process) for forming the diaphragm 402 can be ended, if the resin is cracked, the thickness of the resin differs from a target post-coining resin thickness by more than about 5%, 3%, 2%, 1.6%, 1%, or 0.5% allowed tolerance, for example, if the thickness of the resin differs by more than 0.0015 inches (in.) (0.038 mm) allowed tolerance from a target post-coining resin thickness of 0.0935 inches (2.37 mm), and/or the stud height 426 differs from a target post-coining stud height by more than about 5%, 2%, 1%, 0.7%, 0.5%, 0.42%, 0.4%, 0.3%, 0.2%, or 0.1% allowed tolerance, for example, if the stud height 426 differs by more than 0.002 inches (0.05 mm) allowed tolerance from a target post-coining stud height of 0.480 inches (12.2 mm). In the flowchart of Fig. 6, this checking for cracking of the resin, measuring of resin thickness, and measuring of stud height 426 is shown as the diamond representing a decision to the right of the rectangle representing the coining step. If the resin is cracked, the measured post-coining resin thickness deviates by more than the allowed tolerance, and/or the measured post-coining stud height 426 deviates by more than the allowed tolerance, changes can be made to the parameters of the method (process), for example, to the pressure on, temperature of, and/or dwell time of the resin during the coining of the resin, to avoid cracking, to have the thickness of the resin be within the allowed tolerance of the target post-coining resin thickness, and/or to have the stud height 426 be within the allowed tolerance of the target post-coining stud height in a subsequent run of the method (process) for forming the diaphragm 402.

The method for forming the diaphragm 402 can include inspecting the resin for cracking in the resin, measuring the thickness of the resin, and/or measuring the stud height 426 following the quenching of the resin. The method (process) for forming the diaphragm 402 can be ended, if the resin is cracked, the thickness of the resin differs from a target post-quenching resin thickness by more than about 10%, 8%, 7%, 6.7%, 6%, 5%, 3%, 2%, 1%, or 0.5% allowed tolerance, for example, if the thickness of the resin differs by more than 0.005 inches (in.) (0.13 mm) allowed tolerance from a target post-quenching resin thickness of 0.075 inches (1.91 mm), and/or the stud height 426 differs from a target post-quenching stud height by more than about 7%, 5%, 4%, 3.2%, 3%, 2%, or 1% allowed tolerance, for example, if the stud height 426 differs by more than 0.010 inches (0.25 mm) allowed tolerance from a target post-quenching stud height of 0.315 inches (8.00 mm). In the flowchart of Fig. 6, this checking for cracking of the resin, measuring of resin thickness, and measuring of stud height 426 is shown as the diamond representing a decision to the right of the rectangle representing the quenching step. If the resin is cracked, the measured post-quenching resin thickness deviates by more than the allowed tolerance, and/or the measured post-quenching stud height 426 deviates by more than the allowed tolerance, changes can be made to the parameters of the method (process), for example, to the pressure on, temperature of, and/or dwell time of the resin during the quenching of the resin, to avoid cracking, to have the thickness of the resin be within the allowed tolerance of the target post-quenching resin thickness, and/or to have the stud height 426 be within the allowed tolerance of the target post-quenching stud height in a subsequent run of the method (process) for forming the diaphragm 402.

The method for forming the diaphragm 402 can include a final inspection of the diaphragm 402 including inspecting the resin for cracking in the resin, measuring the thickness of the resin, and/or measuring the stud height 426 following the die cutting and part marking step or following a step of cleaning the diaphragm 402 after the die cutting and part marking step. The diaphragm 402 can be rejected, if the resin is cracked, the thickness of the resin differs from a target resin thickness by more than about 10%, 8%, 7%, 6.7%, 6%, 5%, 3%, 2%, 1%, or 0.5% allowed tolerance, for example, if the thickness of the resin differs by more than 0.005 inches (in.) (0.13 mm) allowed tolerance from a target post-coining resin thickness of 0.075 inches (1.91 mm), and/or the stud height 426 differs from a target post-quenching stud height by more than about 7%, 5%, 4%, 3.2%, 3%, 2%, or 1% allowed tolerance, for example, if the stud height 426 differs by more than 0.010 inches (0.25 mm) allowed tolerance from a target post-sintering stud height of 0.315 inches (8.00 mm). In the flowchart of Fig. 6, this checking for cracking of the resin, measuring of resin thickness, and measuring of stud height 426 is shown as the diamond representing a decision to the right of the rectangle (the last rectangle in the flowchart) representing the final inspection step. If the resin is cracked, the measured resin thickness deviates by more than the allowed tolerance, and/or the measured stud height 426 deviates by more than the allowed tolerance, changes can be made to the parameters of the method (process) to avoid cracking, to have the thickness of the resin be within the allowed tolerance of the target resin thickness, and/or to have the stud height 426 be within the allowed tolerance of the target stud height in a subsequent run of the method (process) for forming the diaphragm 402.

Although certain embodiments include features presented herein and may include additional features that are not specifically presented herein, other embodiments may completely or essentially omit elements that are presented herein or that are not presented herein.

The embodiments illustrated and discussed in this specification are intended only to teach those skilled in the art the best way known to the inventors to make and use the embodiments. Nothing in this specification should be considered as limiting the scope of the embodiments. All examples presented are representative and non-limiting. All structural and functional equivalents to the elements of the above-described embodiments that are known to those of ordinary skill in the art are expressly incorporated herein by reference and are intended to be encompassed. Moreover, it is not necessary for a composition, device, or method to address each and every problem sought to be solved by the embodiments, for it to be encompassed by the embodiments. No embodiment, feature, element, component, or step in this specification (including the written description, claims, abstract, and any drawings) is intended to be dedicated to the public. In this specification (including the written description, claims, abstract, and any drawings), the terms "comprise" or "comprising" do not exclude other elements or steps, the terms "a" or "one" do not exclude a plural number, and the term "or" means either or both, unless this application indicates otherwise. As used herein, the terms "approximately" and "about," as applied to one or more values of interest, refer to a value that is similar to a stated reference value. In certain embodiments, the term "approximately" or "about" refers to a range of values that fall within 25%, 20%, 19%, 18%, 17%, 16%, 15%, 14%, 13%, 12%, 11%, 10%, 9%, 8%, 7%, 6%, 5%, 4%, 3%, 2%, 1%, or less in either direction (greater than or less than) of the stated reference value unless otherwise stated or otherwise evident from the context. In certain embodiments, the term "substantially" refers to a quantity, status, or process that a person having ordinary skill in the art would consider to be complete.

The above-described embodiments may be modified or varied, without departing from the embodiments, as appreciated by those skilled in the art, in light of the above teachings. It is therefore to be understood that, within the scope of the claims and their equivalents, the embodiments may be practiced otherwise than as specifically described.

## Claims

1. A method for forming a diaphragm, comprising:
selecting as a resin
(i) a first powder including:
a first particle set of a first fluoropolymer of an average particle diameter from about 400 µm to about 700 µm,
wherein the first fluoropolymer comprises polytetrafluoroethylene and/or a first copolymer of tetrafluoroethylene comonomer and less than about 1 wt% first non-tetrafluoroethylene comonomer, or
(ii) a second powder including:
a second particle set of a second fluoropolymer of an average particle diameter from about 325 µm to about 625 µm,
wherein the second fluoropolymer comprises polytetrafluoroethylene and/or a second copolymer of tetrafluoroethylene comonomer and less than about 1 wt% second non-tetrafluoroethylene comonomer, or
(iii) a composition, including:
the first powder and the second powder,
optionally sifting the resin,
wherein the sifting comprises allowing the resin to pass through a sifter having holes of diameter from about 500 µm to about 1000 µm,
preforming the resin, including:
loading a pre-determined amount of the resin into a mold, and
compressing the resin in the mold at a preforming pressure from about 800 psi (5.5 MPa) to about 2400 psi (16.6 MPa), optionally for from about 0.5 min. (30 sec.) to about 6 min. (360 sec.),
sintering the resin, including:
optionally increasing a temperature of the resin to a sintering temperature from about 680 °F (360 °C) to about 780 °F (416 °C),
maintaining the temperature at from about 680 °F (360 °C) to about 780 °F (416 °C), optionally for from about 15 min. (900 sec.) to about 45 min. (2700 sec.), and
optionally decreasing the temperature to a cooled temperature from about 180 °F (82 °C) to about 220 °F (104 °C),
coining the resin, including:
maintaining the resin at a coining pressure from about 348 psi (2.40 MPa) to about 398 psi (2.74 MPa) and at a coining temperature from about 630 °F (332 °C) to about 730 °F (389 °C), optionally for from about 2 min. (120 sec.) to about 8 min. (480 sec.) and
stamping the resin to coin the resin,
quenching the resin, including
maintaining the resin at a quenching pressure from about 838 psi (5.78 MPa) to about 908 psi (6.26 MPa) and at a quenching temperature from about 630 °F (332 °C) to about 730 °F (388 °C), optionally for from about 1 min. (60 sec.) to about 3 min. (180 sec.), and
stabilizing the resin at a stabilizing temperature from about 40 °F (4 °C) to about 110 °F (43 °C), optionally for from about 1 hr. (3600 sec.) to about 48 hr. (173,000 sec.) to form the diaphragm as the stabilized resin,
wherein the diaphragm comprises a diaphragm diameter and a diaphragm thickness.

2. The method of claim 1, comprising:
selecting as a resin
(i) a first powder including:
a first particle set of a first fluoropolymer of an average particle diameter from about 475 µm to about 625 µm,
less than about 1 wt% perfluoroether and/or perfluoro(propyl vinyl ether) (PPVE), and
less than about 1 wt% of elements other than carbon and fluorine,
wherein the first fluoropolymer comprises polytetrafluoroethylene and/or a first copolymer of tetrafluoroethylene comonomer and less than about 1 wt% first non-tetrafluoroethylene comonomer, and
wherein the first powder has a bulk density from about 600 g/L to about 800 g/L, or
(ii) a second powder including:
a second particle set of a second fluoropolymer of an average particle diameter from about 400 µm to about 550 µm,
less than about 1 wt% perfluoroether and/or perfluoro(propyl vinyl ether) (PPVE), and
less than about 1 wt% of elements other than carbon and fluorine,
wherein the second fluoropolymer comprises polytetrafluoroethylene and/or a second copolymer of tetrafluoroethylene comonomer and less than about 1 wt% second non-tetrafluoroethylene comonomer, and
wherein the second powder has a bulk density from about 600 g/L to about 800 g/L, or
(iii) a composition, including:
the first powder and the second powder,
preforming the resin, including:
loading a pre-determined amount of the resin into a mold, and
compressing the resin in the mold at a preforming pressure from about 800 psi (5.5 MPa) to about 2400 psi (16.6 MPa),
sintering the resin by applying a sintering temperature from about 680 °F (360 °C) to about 780 °F (416 °C), and optionally decreasing a temperature of the resin to a cooled temperature,
coining the resin by applying a coining pressure from about 348 psi (2.40 MPa) to about 398 psi (2.74 MPa) and a coining temperature from about 630 °F (332 °C) to about 730 °F (389 °C) and by stamping the resin,
quenching the resin by applying a quenching pressure from about 838 psi (5.78 MPa) to about 908 psi (6.26 MPa) and a quenching temperature from about 630 °F (332 °C) to about 730 °F (388 °C), and
stabilizing the resin at a stabilizing temperature from about 40 °F (4 °C) to about 110 °F (43 °C)
to form the diaphragm as the stabilized resin,
wherein the diaphragm comprises a diaphragm diameter and a diaphragm thickness.

3. The method of claim 1, comprising:
selecting as a resin
(i) a first powder including:
a first particle set of a first fluoropolymer of an average particle diameter from about 475 µm to about 625 µm,
less than about 1 wt% perfluoroether and/or perfluoro(propyl vinyl ether) (PPVE), and
less than about 1 wt% of elements other than carbon and fluorine,
wherein the first fluoropolymer comprises polytetrafluoroethylene and/or a first copolymer of tetrafluoroethylene comonomer and less than about 1 wt% first non-tetrafluoroethylene comonomer, and
wherein the first powder has a bulk density from about 600 g/L to about 800 g/L, or
(ii) a second powder including:
a second particle set of a second fluoropolymer of an average particle diameter from about 400 µm to about 550 µm,
less than about 1 wt% perfluoroether and/or perfluoro(propyl vinyl ether) (PPVE), and
less than about 1 wt% of elements other than carbon and fluorine,
wherein the second fluoropolymer comprises polytetrafluoroethylene and/or a second copolymer of tetrafluoroethylene comonomer and less than about 1 wt% second non-tetrafluoroethylene comonomer, and
wherein the second powder has a bulk density from about 600 g/L to about 800 g/L, or
(iii) a composition, including:
the first powder and the second powder,
sifting the resin,
wherein the sifting comprises allowing the resin to pass through a sifter having holes of diameter from about 500 µm to about 1000 µm,
preforming the resin, including:
loading a pre-determined amount of the resin into a mold, and
compressing the resin in the mold at a preforming pressure from about 800 psi (5.5 MPa) to about 2400 psi (16.6 MPa) for from about 0.5 min. (30 sec.) to about 6 min. (360 sec.),
sintering the resin, including:
increasing a temperature of the resin to a sintering temperature from about 680 °F (360 °C) to about 780 °F (416 °C),
maintaining the temperature at from about 680 °F (360 °C) to about 780 °F (416 °C) for from about 15 min. (900 sec.) to about 45 min. (2700 sec.), and
decreasing the temperature to a cooled temperature from about 180 °F (82 °C) to about 220 °F (104 °C),
coining the resin, including:
maintaining the resin at a coining pressure from about 348 psi (2.40 MPa) to about 398 psi (2.74 MPa) and at a coining temperature from about 630 °F (332 °C) to about 730 °F (389 °C), optionally for from about 2 min. (120 sec.) to about 8 min. (480 sec.) and
stamping the resin to coin the resin,
quenching the resin, including
maintaining the resin at a quenching pressure from about 838 psi (5.78 MPa) to about 908 psi (6.26 MPa) and at a quenching temperature from about 630 °F (332 °C) to about 730 °F (388 °C), optionally for from about 1 min. (60 sec.) to about 3 min. (180 sec.), and
stabilizing the resin at a stabilizing temperature from about 40 °F (4 °C) to about 110 °F (43 °C) for from about 1 hr. (3600 sec.) to about 48 hr. (173,000 sec.) to form the diaphragm as the stabilized resin,
wherein the diaphragm comprises a diaphragm diameter and a diaphragm thickness.

4. The method of any one of claims 1 through 3,
wherein increasing the temperature of the resin to the sintering temperature includes increasing the temperature at a rate of about 90 ± 10 °F/hr. (0.0139 ± 0.0015 °C/sec.) to about 230 °F (110 °C), maintaining the temperature of about 230 °F (110 °C) for about 30 mins. (1800 sec.), increasing the temperature at a rate of about 144 ± 10 °F/hr. (0.022 ± 0.0015 °C/sec.) to about 585 °F (307 °C), and increasing the temperature at a rate of about 144 ± 10 °F/hr. (0.022 ± 0.0015 °C/sec.) to the sintering temperature,
wherein decreasing the temperature to the cooled temperature includes decreasing the temperature at a rate of about 260 ± 10 °F/hr. (0.040 ± 0.0015 °C/sec.) to about 600 ± 10 °F (316 ± 6 °C), decreasing the temperature at a rate of about 40 °F/hr. (0.0062 °C/sec.) to about 580 °F (304 °C), and decreasing the temperature to the cooled temperature.

5. The method of any one of claims 1 through 4, wherein forming the diaphragm includes forming the diaphragm
with the diaphragm diameter from about 0.5 inches (13 mm) to about 6 inches (152 mm) and
with the diaphragm thickness from about 0.04 inches (1.0 mm) to about 0.12 inches (3.0 mm).

6. The method of any one of claims 1 through 5, further comprising:
inspecting for cracking in the resin and measuring a thickness of the resin following the preforming and ending the forming of the diaphragm if the resin is cracked or the thickness of the resin differs from a target post-preforming resin thickness by more than about 2%,
inspecting for cracking in the resin and measuring the thickness of the resin following the sintering and ending the forming of the diaphragm if the resin is cracked or the thickness of the resin differs from a target post-sintering resin thickness by more than about 3%,
inspecting for cracking in the resin and measuring the thickness of the resin following the coining and ending the forming of the diaphragm if the resin is cracked or the thickness of the resin differs from a target post-coining resin thickness by more than about 2%, and
inspecting for cracking in the resin and measuring the thickness of the resin following the quenching and ending the forming of the diaphragm if the resin is cracked or the thickness of the resin differs from a target post-quenching resin thickness by more than about 7%.

7. The method of any one of claims 1 through 6,
wherein the preforming, sintering, coining, quenching, and stabilizing are conducted with a stud in the resin, so that the diaphragm comprises the stud, and a stud height is the distance between a top of the stud and a bottom of the resin and
optionally measuring the stud height following the preforming and ending the forming of the diaphragm if the stud height differs from a target post-preforming stud height by more than about 0.4%, measuring the stud height following the sintering and ending the forming of the diaphragm if the stud height differs from a target post-sintering stud height by more than about 1%, measuring the stud height following the coining and ending the forming of the diaphragm if the stud height differs from a target post-coining stud height by more than about 0.4%, and measuring the stud height following the quenching and ending the forming of the diaphragm if the stud height differs from a target post-quenching stud height by more than about 3%.

8. The method of any one of claims 1 through 7, further comprising:
punching a guide hole through the diaphragm, and/or
die cutting the diaphragm, and/or
stamp marking the diaphragm.

9. The method of any one of claims 1 through 8,
wherein preforming the resin comprises compressing the resin in the mold at the preforming pressure from about 1400 psi (9.6 MPa) to about 1800 psi (12.4 MPa) for from about 1 min. (60 sec.) to about 4 min. (240 sec.), and/or
wherein sintering the resin includes:
increasing the temperature of the resin to the sintering temperature from about 720 °F (382 °C) to about 740 °F (393 °C),
maintaining the temperature at from about 720 °F (382 °C) to about 740 °F (393 °C) for from about 15 min. (900 sec.) to about 45 min. (2700 sec.), and
decreasing the temperature to the cooled temperature from about 190 °F (88 °C) to about 210 °F (99 °C), and/or
wherein coining the resin comprises maintaining the resin at the coining pressure from about 348 psi (2.40 MPa) to about 398 psi (2.74 MPa) and at the coining temperature from about 670 °F (354 °C) to about 690 °F (366 °C) for from about 4 min. (240 sec.) to about 6 min. (360 sec.), and/or
wherein quenching the resin comprises maintaining the resin at the quenching pressure from about 838 psi (5.78 MPa) to about 908 psi (6.26 MPa) and at the quenching temperature from about 670 °F (354 °C) to about 690 °F (366 °C) for from about 1 min. (60 sec.) to about 3 min. (180 sec.), and/or
wherein stabilizing the resin comprises maintaining the resin at the stabilizing temperature from about 60 °F (16 °C) to about 90 °F (32 °C) for from about 1 hr. (3600 sec.) to about 48 hr. (173,000 sec.).

10. The method of any one of claims 1 through 9, wherein forming the diaphragm includes forming the diaphragm
with the diaphragm diameter from about 0.75 inches (19 mm) to about 4 inches (102 mm), and
with the diaphragm thickness from about 0.07 inches (1.8 mm) to about 0.10 inches (2.5 mm).

11. The method of any one of claims 1 through 10,
wherein the first fluoropolymer comprises the first copolymer of tetrafluoroethylene comonomer and less than about 0.8 wt% first non-tetrafluoroethylene copolymer and
wherein the second fluoropolymer comprises the second copolymer of tetrafluoroethylene comonomer and less than about 0.8 wt% second non-tetrafluoroethylene comonomer.

12. The method of any one of claims 1 through 11,
wherein the first powder and the second powder together have a bimodal distribution of particle diameters and/or
wherein a difference between the average particle diameter of the first particle set and the average particle diameter of the second particle set is from about 50 µm to about 100 µm.

13. The method of any one of claims 1 through 12, wherein the composition comprises from about 25 wt% to about 75 wt% of the first fluoropolymer.

14. The method of any one of claims 1 through 13,
wherein the first non-tetrafluoroethylene comonomer of the first copolymer of the first fluoropolymer comprises a first perfluoro(alkyl vinyl ether) selected from the group consisting of perfluoro(methyl vinyl ether), perfluoro(ethyl vinyl ether), perfluoro(propyl vinyl ether), perfluoro(n-propyl vinyl ether), perfluoro(1-methylethyl vinyl ether), and combinations thereof and
wherein the second non-tetrafluoroethylene comonomer of the second copolymer of the second fluoropolymer comprises a second perfluoro(alkyl vinyl ether) selected from the group consisting of perfluoro(methyl vinyl ether), perfluoro(ethyl vinyl ether), perfluoro(propyl vinyl ether), perfluoro(n-propyl vinyl ether), perfluoro(1-methylethyl vinyl ether), and combinations thereof.

15. The method of any one of claims 1 through 10,
wherein the first particle set of the first fluoropolymer has the average particle diameter from about 500 µm to about 600 µm,
wherein the first fluoropolymer comprises the first copolymer of tetrafluoroethylene comonomer and less than about 1 wt% first non-tetrafluoroethylene comonomer,
wherein the first non-tetrafluoroethylene comonomer of the first copolymer of the first fluoropolymer comprises perfluoro(methyl vinyl ether) and/or perfluoro(propyl vinyl ether),
wherein the first powder has the bulk density from about 650 g/L to about 750 g/L,
wherein the second particle set of the second fluoropolymer has the average particle diameter from about 400 µm to about 525 µm,
wherein the second fluoropolymer comprises the second copolymer of tetrafluoroethylene comonomer and less than about 1 wt% second non-tetrafluoroethylene comonomer,
wherein the second non-tetrafluoroethylene comonomer of the second copolymer of the second fluoropolymer comprises perfluoro(methyl vinyl ether) and/or perfluoro(propyl vinyl ether),
wherein the second powder has the bulk density from about 650 g/L to about 750 g/L, wherein the composition comprises from about 25 wt% to about 75 wt% of the first fluoropolymer and from about 75 wt% to about 25 wt% of the second fluoropolymer, and
wherein a difference between the average particle diameter of the first particle set and the average particle diameter of the second particle set is from about 25 µm to about 125 µm.
